# EUROPÄISCHE PATENTSCHRIFT

(11) **EP 3 819 722 B1**
(45) Veröffentlichungstag und Bekanntmachung des Hinweises auf die Patenterteilung: **10.05.2023**
(21) Anmeldenummer: 20206789.8
(22) Anmeldetag: 10.11.2020
(51) Int. Cl.: G05B 13/02, G05B 13/04, F24C 7/08

(54) **VERFAHREN ZUR BESTIMMUNG VON WENIGSTENS EINEM ZIEL-PROZESSPARAMETER SOWIE STEUEREINHEIT**
METHOD FOR DETERMINING AT LEAST ONE TARGET PROCESS PARAMETER AND CONTROL UNIT
PROCÉDÉ DE DÉTERMINATION D'AU MOINS UN PARAMÈTRE DE PROCESSUS CIBLE AINSI QU'UNITÉ DE COMMANDE

(30) Priorität: 11.11.2019 DE 102019130382
(43) Veröffentlichungstag der Anmeldung: 12.05.2021
(73) Patentinhaber: Rational Aktiengesellschaft, 86899 Landsberg am Lech (DE)
(72) Erfinder: Waitz, Reimar, 86899 Landsberg am Lech (DE)
(74) Vertreter: Prinz & Partner mbB

(56) Entgegenhaltungen:
- DE-A1-102018 105 232
- US-A1- 2005 288 812
- US-A1- 2009 054 998

## Beschreibung

Die Erfindung betrifft ein Verfahren zur Bestimmung von wenigstens einem Ziel-Prozessparameter während eines Verarbeitungsprozesses von Produkten.

Ferner betrifft die Erfindung eine Steuereinheit zur Durchführung des Verfahrens, ein Computerprogramm sowie einen computerlesbaren Datenträger.

Verarbeitungsprozesse von Produkten bestehen aus vielen verschiedenen Verarbeitungsphasen, die allesamt einen Einfluss auf die Qualität des verarbeiteten Produkts, das heißt des Prozessergebnisses haben.

Beispiele solcher Verarbeitungsprozesse sind die Herstellung von Pharmazeutika, Klebstoffe, Lacke und andere Chemikalien, Auftragen eines Lackes, z.B. auf ein Karosserieteil, oder die Zubereitung von Lebensmitteln.

Solche Verarbeitungsprozesse können auch über mehrere Verarbeitungsgeräte verteilt durchgeführt werden, wodurch die Kontrolle der Qualität schwierig wird. Auch beeinflusst eine Vielzahl von Faktoren die Qualität des Prozessergebnisses, sodass eine Vorhersage des Prozessergebnisses äußerst schwierig ist.

DE 10 2018 105232 A1 offenbart ein Verfahren zum Erkennen wenigstens eines Beladungsparameters eines Garraums von einem Gargerät mittels elektromagnetischer Strahlung, bei dem zwei Messungen von wenigstens einer Messgröße verwendet werden. Die zumindest zwei Messungen hinsichtlich der wenigstens einen Messgröße werden ausgewertet, um wenigstens eine Auswertungsgröße aus den Messergebnissen zu erhalten, über die der Beladungsparameter bestimmt wird, indem ein mathematisches Modell angewendet wird.

Aus der US 2005/288812 A1 ist ein System zur Qualitätsprognose eines Herstellungsprozesses bekannt. Das System umfasst eine Einheit zum Ermitteln einer hypothetischen Qualität einer aktuellen Produktionscharge, wobei in die Ermittlung Parameter eines Produktionswerkzeugs einfließen. In einer Einheit zum Berechnen einer Vorhersage wird anhand der ermittelten hypothetischen Qualität und zumindest eines gemessenen Parameters wenigstens einer früheren Produktionscharge ein Schätzwert für die Qualität einer folgenden Produktionscharge ermittelt.

Die US 2009/054998 A1 beschreibt ein Echtzeit-Prozesskontrollsystem, in welchem eine Komponente zur linearen Programmierung sowie mindestens eine komplexere Prozesskontrollkomponente vorhanden sind, die in einer "closed loop" miteinander verbunden sind. Die komplexe Prozesskontrollkomponente kann eine "Advanced process controller" (APC)-Komponente sein, die basierend auf dem bisherigen Verhalten den Zustand des Prozesses in der Zukunft abschätzt. Falls diese nicht optimal sind, werden zukünftige Soll-Werte für die Prozessparameter berechnet, um die erreichbaren Zukunftswerte zu optimieren.

Es ist Aufgabe der Erfindung, ein Verfahren sowie eine Steuereinheit bereitzustellen, die eine Bestimmung von wenigstens einem Ziel-Prozessparameter, insbesondere eines Prozessergebnisses, einfach und mit großer Präzision bestimmen können.

Die Aufgabe wird gelöst durch ein Verfahren gemäß Anspruch 1 zur Bestimmung von wenigstens einem Ziel-Prozessparameter während eines Verarbeitungsprozesses zu einem Gegenwartszeitpunkt, wobei der Verarbeitungsprozess zumindest teilweise ein Garprozess ist und in einem Garraum eines Gargerätes als Verarbeitungsgerät durchgeführt wird.

Dadurch, dass nicht nur die Werte der Parameter zum Gegenwartszeitpunkt zur Vorhersage berücksichtigt werden, sondern auch Werte aus der Vergangenheit und wahrscheinlich zukünftig auftretende Werte, ist eine sehr präzise Bestimmung der Ziel-Prozessparameter mithilfe eines künstlichen neuronalen Netzwerks möglich.

Außerdem ermöglicht das künstliche neuronale Netzwerk eine sehr einfache Umsetzung dieser komplexen Aufgabe.

Ein Verarbeitungsprozess hat im Rahmen dieser Erfindung wenigstens eine Verarbeitungsphase, die in einem Verarbeitungsgerät durchgeführt wird. Der Verarbeitungsprozess bzw. die wenigstens eine Verarbeitungsphase enthält im Rahmen dieser Erfindung den zukünftigen zeitlichen Soll-Verlauf wenigstens eines Prozessparameters, beispielsweise eines Umgebungsparameters bzw. wenigstens eines Kontrollparameters, der wenigstens einen Umgebungsparameter beeinflusst.

Der Soll-Verlauf kann sich im Laufe des Verarbeitungsprozesses aufgrund der im Folgenden beschrieben Anpassungen und/oder Optimierungen ändern.

Zum Beispiel hat ein Verarbeitungsprozess und/oder jede Verarbeitungsphase einen Endzeitpunkt, an dem der Verarbeitungsprozess bzw. die Verarbeitungsphase abgeschlossen ist.

Unter einem Prozessparameter wird im Rahmen dieser Erfindung jeder Parameter verstanden, der einen Einfluss auf das Prozessergebnis hat. Dies können, unter anderen, Parameter der Umwelt des Verarbeitungsgerätes, Parameter des Verarbeitungsgerätes, Umgebungsparameter, d.h. Parameter der Prozessumgebung, Aktoransteuerungenssignale oder Aktoranforderungssignale, d.h. die Schaltzustände und oder Betriebsparameter von mindestens einem Aktor bzw. Komponente des Verarbeitungsgerätes, Produktparameter, d.h. Parameter des Produkts, und/oder die Platzierung des Produkts im Verarbeitungsgerät sein.

Ein Vergangenheitswert eines Prozessparameters ist ein gemessener oder anderweitig bestimmter Wert des jeweiligen Prozessparameters zum aktuellen Zeitpunkt oder einem Zeitpunkt in der Vergangenheit, d.h. zum oder vor dem Gegenwartszeitpunkt.

Ein Zukunftswert eines Prozessparameters ist ein gemessener oder anderweitig bestimmter Wert (z.B. durch eines der Module und/oder ein künstliches neuronales Netzwerk der Steuereinheit) des jeweiligen Prozessparameters zu einem Zeitpunkt in der Zukunft, d.h. nach dem Gegenwartszeitpunkt.

Die Vergangenheits- und/oder Zukunftswerte der Prozessparameter können auch Werte der Prozessparameter anderer Verarbeitungsphasen sein.

Zum Beispiel werden Werte des wenigstens einen Ziel-Prozessparameters für mehrere zukünftige Zeitpunkte bestimmt, insbesondere für alle zukünftigen Werte bis zum Abschluss des Verarbeitungsprozesses bzw. der Verarbeitungsphase, d.h. bis zum Endzeitpunkt.

Erfindungsgemäß ist der Verarbeitungsprozess zumindest teilweise, insbesondere ist wenigstens eine Verarbeitungsphase, ein Garprozess und wird in einem Garraum eines Gargerätes als Verarbeitungsgerät durchgeführt. In einer Ausgestaltung ist der Verarbeitungsprozess zusätzlich zumindest teilweise, insbesondere ist wenigstens eine Verarbeitungsphase,
- ein Abkühlprozess und wird in einem Abkühlgerät als Verarbeitungsgerät durchgeführt; und/oder
- ein Warmhalteprozess und wird in einem Warmhaltegerät als Verarbeitungsgerät durchgeführt; und/oder
- ein Lagerprozess und wird in einem Lagergerät als Verarbeitungsgerät durchgeführt; und/oder
- ein Transportprozess und wird in einem Transportgerät als Verarbeitungsgerät durchgeführt.

Auf diese Weise ist das Verfahren nicht auf ein bestimmtes Verarbeitungsgerät beschränkt und es können auch Ziel-Prozessparameter für komplexe Verarbeitungsprozesse bestimmt werden, insbesondere solche Verarbeitungsprozesse, die in verschiedenen Verarbeitungsgeräten durchgeführt werden.

Ein Verarbeitungsprozess enthält im Rahmen dieser Erfindung beispielsweise den zukünftigen zeitlichen Soll-Verlauf wenigstens eines Umgebungsparameters im Prozessraum bzw. wenigstens eines Kontrollparameters des Verarbeitungsgeräts, der wenigstens einen Umgebungsparameter beeinflusst. In anderen Worten kann ein Garprozess als Rezept zur Zubereitung des Produktes, in diesem Falle eines Lebensmittels, angesehen werden. In gleicher Weise können der Abkühlprozess, der Warmhalteprozess, der Lagerprozess und/oder der Transportprozess ausgeführt sein.

Ein Kontrollparameter kann sich zum Beispiel dadurch auszeichnen, dass dieser durch die Steuereinheit direkt vorgegeben werden kann, zum Beispiel ist der Schaltzustand eines Heizregisters ein Kontrollparameter.

Die Steuereinheit kann dabei eigenständig sein oder die Steuereinheit des Gargeräts, des Abkühlgeräts, des Warmhaltegeräts, des Lagergeräts und/oder des Transportgeräts sein.

In einer Ausführungsform umfasst das künstliche neuronale Netzwerk wenigstens einen Convolutional Layer und/oder wenigstens einen Recurrent Layer. Der Recurrent Layer umfasst insbesondere wenigstens ein Basic Recurrent Layer, wenigstens einen Long Short-Term Memory Layer, wenigstens einen Gated Recurrent Unit Layer und/oder wenigstens einen Minimal Gated Unit Layer, beispielsweise mit zwischen 50 und 100 Units. Die Anzahl der Einheiten im Convolutional Layer können der Anzahl an zu bestimmenden Ziel-Prozessparametern entsprechen.

Dadurch wird ein effizientes künstliches neuronales Netzwerk bereitgestellt, dass Ziel-Prozessparameter mit hoher Genauigkeit bestimmen kann.

Beispielsweise ist wenigstens einer des wenigstens einen ersten Prozessparameters ein zeitunabhängiger Prozessparameter und/oder ein kontrollierter Prozessparameter, dessen Vergangenheitswerte und Zukunftswerte bekannt sind, wodurch die Bestimmung des wenigstens einen zukünftigen Wertes des Ziel-Prozessparameters vereinfacht wird.

Unter einem kontrollierten Prozessparameter werden solche Prozessparameter verstanden, die durch wenigstens eine Komponente des Verarbeitungsgeräts kontrolliert werden. Die wenigstens eine Komponente wird gemäß dem Verarbeitungsprozess angesteuert, sodass der kontrollierte Prozessparameter stets dem im Verarbeitungsprozess vorgegebenen Wert entspricht. Die Zukunftswerte eines kontrollierten Prozessparameters können daher dem Verarbeitungsprozess, dem Vorhersagemodul und/oder einem Anpassungsmodul der Steuereinheit entnommen werden. Die Vergangenheitswerte eines kontrollierten Prozessparameters können dem Verarbeitungsprozess entnommen werden und/oder sie können in der Vergangenheit gemessen worden sein.

Kontrollierte Prozessparameter sind zum Beispiel die Temperatur im Verarbeitungsgerät, insbesondere im Prozessraum und/oder die Feuchte im Verarbeitungsgerät, insbesondere im Prozessraum, beispielsweise im Garraum eines Kombidämpfers.

Unter einem zeitunabhängigen Prozessparameter werden solche Prozessparameter verstanden, die durch äußere Gegebenheiten vorgegeben sind und sich über den Zeitraum der Ausführung einer der Verarbeitungsphasen oder des gesamten Verarbeitungsprozesses nicht wesentlich ändern. Ein zeitunabhängiger Prozessparameter ist daher konstant, sodass die Zukunftswerte und die Vergangenheitswerte eines zeitunabhängigen Prozessparameters Spezifikationen entnommen oder einmal gemessen werden können.

Zeitunabhängige Prozessparameter sind zum Beispiel die Größe des Prozessraumes des Verarbeitungsgerätes, insbesondere des Garraums, der Gerätetyp des Verarbeitungsgerätes, die Umgebungstemperatur des Verarbeitungsgerätes, der Typ bzw. der Klasse des Produkts, die Platzierung des Produkts im Verarbeitungsgerät und/oder die Höhe des Verarbeitungsgeräts über dem Meeresspiegel.

In einer Ausführungsvariante ist wenigstens einer des wenigstens einen zweiten Prozessparameters ein gemessener Prozessparameter, dessen Vergangenheitswerte durch Messungen bekannt sind, wodurch präzise Daten über den bisherigen Verlauf des Verarbeitungsprozesses verwendet werden.

Unter einem gemessenen Prozessparameter werden solche Prozessparameter verstanden, die durch eine Komponente des Verarbeitungsgeräts gemessen werden können, jedoch nicht direkt kontrolliert werden können. Die Zukunftswerte eines gemessenen Prozessparameters sind daher nicht bekannt. Die Vergangenheitswerte eines gemessenen Prozessparameters sind in der Vergangenheit gemessen worden.

Ein gemessener Prozessparameter ist zum Beispiel die mit einem Kerntemperaturfühler gemessene Kerntemperatur des Produkts.

In einer Ausgestaltung der Erfindung ist wenigstens einer des wenigstens einen Ziel-Prozessparameters ein verborgener Prozessparameter oder ein gemessener Prozessparameter, insbesondere wobei Vergangenheitswerte des Ziel-Prozessparameters bereitgestellt, dem Vorhersagemodul übergeben und zur Bestimmung der Werte des wenigstens einen Ziel-Prozessparameters für zukünftige Zeitpunkte herangezogen werden. Auf diese Weise können sogar verborgene Prozessparameter zur Bestimmung herangezogen werden, wodurch die Genauigkeit des Verfahrens weiter gesteigert wird.

Unter einem verborgenen Prozessparameter werden solche Prozessparameter verstanden, die nicht durch eine Komponente des Verarbeitungsgeräts gemessen werden. Weder die Zukunftswerte eines verborgenen Prozessparameters noch die Vergangenheitswerte eines verborgenen Prozessparameters sind somit durch direkte Messungen bekannt. Es ist jedoch möglich, Zukunftswerte und/oder Vergangenheitswerte eines verborgenen Prozessparameters zu bestimmen, z.B. mittels eine künstlichen neuronalen Netzwerks.

Verborgene Prozessparameter sind zum Beispiel Eigenschaften des Produkts, insbesondere sensorische Eigenschaften, wie Bräunung und/oder Knusprigkeit, die während des Verarbeitungsprozesses nicht gemessen werden.

In einer Ausführungsform liegen die Vergangenheitswerte eines der Prozessparameter, die Zukunftswerte eines der Prozessparameter und/oder die Vergangenheitswerte und die Zukunftswerte eines der Prozessparameter jeweils als Zeitspur vor, wodurch die Genauigkeit des Verfahren weiter gesteigert werden kann, da dem künstlichen neuronalen Netzwerk auch Informationen über den zeitlichen Ablauf übermittelt werden.

Unter einer Zeitspur wird im Rahmen dieser Erfindung eine Reihe von diskreten Werten des entsprechenden Prozessparameters zu verschiedenen Zeitpunkten in chronologischer Reihenfolge verstanden.

Vergangenheitswerte des Ziel-Prozessparameters können auch als Zeitspur vorliegen.

Die dem künstlichen neuronalen Netzwerk übergebenen Zeitspuren können die gleiche Länge haben, wodurch diese effizienter zu verarbeiten sind.

Um effizient vollständige Zeitspuren zu erzeugen, können für den Ziel-Prozessparameter und/oder den wenigstens einen zweiten Prozessparameter, insbesondere einem gemessenen Prozessparameter oder einem verborgenen Prozessparameter, die Zukunftswerte gleich einem konstanten Wert, insbesondere einem für den jeweiligen Prozessparameter typischen Wert gesetzt werden.

In einer Ausführungsform der Erfindung wird wenigstens eine Referenzzeitspur bereitgestellt, dem Vorhersagemodul übergeben und zur Bestimmung der Werte des wenigstens einen Ziel-Prozessparameters für zumindest einen zukünftigen Zeitpunkt herangezogen, wobei die Referenzzeitspur für Zeitpunkte vor dem Gegenwartszeitpunkt einen ersten Wert, insbesondere 1, und für Zeitpunkte nach dem Gegenwartszeitpunkt einen zweiten Wert, insbesondere 0 oder -1, enthält. Durch die Referenzzeitspur kann dem künstlichen neuronalen Netzwerk Informationen darüber übermittelt werden, welche Werte der übergebenen Prozessparameter Vergangenheitswerte bzw. Zukunftswerte sind.

Zur besonders präzisen Bestimmung kann das Vorhersagemodul ein künstliches neuronales Netzwerk aufweisen, das die Vergangenheitswerte des wenigstens einen Prozessparameters und/oder des wenigstens einen Ziel-Prozessparameters, die Zukunftswerte des wenigstens einen Prozessparameters und die Referenzzeitspur erhält und die Werte des wenigstens einen Ziel-Prozessparameters zumindest für einen zukünftigen Zeitpunkt bestimmt.

In einer weiteren Ausführungsform weist das Vorhersagemodul ein erstes künstliches neuronales Netzwerk und ein zweites künstliches neuronales Netzwerk auf. Das erste künstliche neuronale Netzwerk erhält die Vergangenheitswerte des wenigstens einen ersten Prozessparameters, des wenigstens einen zweiten Prozessparameters und/oder des wenigstens einen Ziel-Prozessparameters und ermittelt wenigstens eine latente Variable als Ausgabe. Das zweite künstliche neuronale Netzwerk erhält die vom ersten künstlichen neuronalen Netzwerk ermittelte wenigstens eine latente Variable sowie die Vergangenheitswerte und/oder die Zukunftswerte des wenigstens einen ersten und/oder zweiten Prozessparameters und bestimmt anhand der latenten Variable sowie der erhaltenen Vergangenheitswerte und/oder der Zukunftswerte die Werte des wenigstens einen Ziel-Prozessparameters zumindest für einen zukünftigen Zeitpunkt. Auf diese Weise können die künstlichen neuronalen Netze einfacher ausgestaltet sein. Die latente Variable kann als abstrakte zeitunabhängige Eigenschaft des Produkts, der Prozessumgebung, der Produktumgebung und/oder des Verarbeitungsgerätes aufgefasst werden, zum Beispiel als Kaliber des Produkts.

In einer Ausführungsform ist das wenigstens eine Vorhersagemodul ein Umgebungsmodul, das als Ziel-Prozessparameter einen Umgebungsparameter und/oder wenigstens einen Kontrollparameter, der den wenigstens einen Umgebungsparameter beeinflusst, bestimmt, und/oder ein Prozessergebnismodul, das als Ziel-Prozessparameter einen Produktparameter bestimmt. Auf diese Weise können die Vorhersagemodule spezielle Aufgaben übernehmen, um genauere Ergebnisse zu liefern.

Unter Umgebungsparameter bzw. Parameter der Prozessumgebung werden solche Prozessparameter verstanden, die lediglich eine Eigenschaft der Umgebung des Produkts und keine Eigenschaft des Produkts selbst beschreiben. Diese können auch Eigenschaften von Strahlungen, zum Beispiel Mikrowellen- und/oder Infrarotstrahlung umfassen.

Ein Beispiel für solche Umgebungsparameter ist die Temperatur des Prozessraums in der Mitte des Prozessraums.

Unter Produktparameter bzw. Parameter des Produkts werden solche Prozessparameter verstanden, die Eigenschaften des Produkts selbst beschreiben, d.h. solche Parameter, die auch nach Entnahme des Produkts aus dem Verarbeitungsgerät vorhanden sind. Insbesondere bestimmen die Produktparameter die Qualität des Prozessergebnisses. Beispiele für Produktparameter sind die Bräunung und die Kerntemperatur.

Beispielsweise weist die Steuereinheit, insbesondere das Verarbeitungsgerät, ein erstes Vorhersagemodul, das ein Umgebungsmodul ist, und ein zweites Vorhersagemodul auf, das ein Prozessergebnismodul ist. Das erste Vorhersagemodul bestimmt die Werte des wenigstens einen Umgebungsparameters und/oder des wenigstens einen Kontrollparameters zumindest für einen zukünftigen Zeitpunkt, insbesondere auch für zumindest einen vergangenen Zeitpunkt als Werte seines wenigstens einen Ziel-Prozessparameters. Das zweite Vorhersagemodul erhält die Werte des wenigstens einen Umgebungsparameters zumindest für zumindest einen zukünftigen Zeitpunkt, insbesondere auch für zumindest einen vergangenen Zeitpunkt vom ersten Vorhersagemodul, und das zweite Vorhersagemodul bestimmt zumindest anhand der erhaltenen Werte des wenigstens einen Umgebungsparameters und/oder Kontrollparameters die Werte zumindest für einen zukünftigen Zeitpunkt des wenigstens einen Produktparameters als Werte seines Ziel-Prozessparameters. Auf diese Weise werden besonders genaue Werte für den wenigstens einen Produktparameter als Ziel-Prozessparameter erhalten.

Die Werte des wenigstens einen Umgebungsparameters für vergangene Zeitpunkte können selbstverständlich auch durch Messungen gewonnen werden.

Für eine besonders effiziente Bestimmung kann das erste Vorhersagemodul ein künstliches neuronales Netzwerk aufweisen, das eine Referenzzeitspur erhält und/oder das zweite Vorhersagemodul kann zwei künstliche neuronale Netzwerke aufweisen.

In einer Ausführungsform ist eines des wenigstens einen Verarbeitungsgeräts ein Gargerät und Messwerte eines Kerntemperaturfühlers werden von einer Steuereinheit des Gargerätes erhalten und protokolliert. Einer des wenigstens einen Ziel-Prozessparameters ist die Kerntemperatur des Produkts, wobei Werte der Kerntemperatur auch für zumindest einen vergangenen Zeitpunkt durch das Vorhersagemodul bestimmt werden. Die Steuereinheit führt einen Vergleich der Messwerte des Kerntemperaturfühlers mit den durch das Vorhersagemodul bestimmten Werten der Kerntemperatur durch, wobei die Steuereinheit anhand des Ergebnisses des Vergleichs bestimmt, ob der Kerntemperaturfühler korrekt im Produkt eingesteckt ist oder nicht. Dabei können die Messwerte des Kerntemperaturfühlers dem Vorhersagemodul als Vergangenheitsdaten eines zweiten Prozessparameters zugeführt werden. Auf diese Weise ermöglicht das Verfahren eine Bestimmung, ob ein Kerntemperaturfühler korrekt in das Produkt eingesteckt wurde.

Beispielsweise ist eines des wenigstens einen Verarbeitungsgeräts ein Gargerät und Messwerte eines Kerntemperaturfühlers werden von einer Steuereinheit des Gargerätes erhalten und protokolliert und an das Vorhersagemodul als Vergangenheitswerte eines Prozessparameters übergeben, wobei einer des wenigstens einen Ziel-Prozessparameters die tatsächliche Kerntemperatur des Produkts und/oder ein Maß für die Güte der Stechung des Kerntemperaturfühlers ist, wodurch sich die Kerntemperatur und die Güte der Stechung effizient und genau bestimmen lassen.

Um das Ergebnis des Verarbeitungsprozesses weiter zu verbessern, können, sofern erkannt wurde, dass der Kerntemperaturfühler nicht korrekt im Produkt eingesteckt ist, die durch das Vorhersagemodul bestimmten Werte zur weiteren Steuerung bzw. Regelung des Verarbeitungsgerätes anstelle der Messwerte des Kerntemperaturfühlers herangezogen werden.

In einer Ausführungsform wird das wenigstens eine künstliche neuronale Netzwerk durch überwachtes Lernen mit Trainingsdatensätzen trainiert, wobei die Trainingsdatensätze Eingangs-Trainingsdaten und zughörige Ergebnisdaten aufweisen. Die Eingangs-Trainingsdaten umfassen jeweils Vergangenheitswerte und Zukunftswerte wenigstens eines ersten Prozessparameters des Verarbeitungsprozesses und Vergangenheitswerte wenigstens eines zweiten Prozessparameters des Verarbeitungsprozesses. Die Ergebnisdaten umfassen diejenigen Ziel-Prozessparameter zumindest für einen zukünftigen Zeitpunkt, die sich bei der Ausführung eines Verarbeitungsprozesses, wie er durch die Eingangs-Trainingsdaten beschrieben wird, ergeben. Hierdurch ist ein effizientes Training möglich.

Beispielsweise werden die folgenden Trainingsschritte ausgeführt:
- Vorwärtsspeisen des künstlichen neuronalen Netzwerks mit den Eingangs-Trainingsdaten mindestens eines Trainingsdatensatz,
- Bestimmen der Werte des wenigstens einen Ziel-Prozessparameters zumindest für einen zukünftigen Zeitpunkt durch das künstliche neuronale Netzwerk anhand der jeweiligen Eingangs-Trainingsdaten,
- Bestimmen eines Fehlers zwischen den bestimmten Werten des wenigstens einen Ziel-Prozessparameters und den Werten der Ergebnisdaten des entsprechenden Trainingsdatensatzes, und
- Ändern von Gewichtungsfaktoren und/oder Schwellwerten des künstlichen neuronalen Netzwerks durch Rückwärtsspeisen des künstlichen neuronalen Netzwerks mit dem Fehler.

Auf diese Weise lässt sich das künstliche neuronale Netzwerk zuverlässig trainieren.

Zum Ändern der Gewichtungsfaktoren und/oder Schwellwerte wird zum Beispiel ein Gradient des Fehlers bezüglich der von Gewichtungsfaktoren und Schwellenwerten des künstlichen neuronalen Netzwerks durch Rückwärtsspeisen des künstlichen neuronalen Netzwerks mit dem Fehler berechnet und anschließend werden die der Gewichtungsfaktoren und/oder Schwellwerte des künstlichen neuronalen Netzwerks durch einen Optimierungsalgorithmus geändert, insbesondere durch ein Gradientenabstiegsverfahren, ein stochastisches Gradientenabstiegsverfahren, durch momentum gradient descent, Nesterov accelerated gradient, durch Adagrad, durch Adadelta, oder Adam. Solche Verfahren sind bekannt.

Um eine große Menge an zuverlässigen Trainingsdatensätzen zu erzeugen, können die Trainingsdatensätze, insbesondere für ein Umgebungsmodul und/oder ein Prozessergebnismodul, mittels einer Simulation der Umgebung des Produkts bzw. des Produkts, insbesondere einer Simulation basierend auf der Finite-Elemente-Methode oder numerischer Strömungsmechanik (CFD) ermittelt werden.

Ferner wird die Aufgabe gelöst durch eine Steuereinheit für wenigstens ein Verarbeitungsgerät, die wenigstens ein Vorhersagemodul aufweist, wobei die Steuereinheit dazu eingerichtet ist, ein zuvor beschriebenes Verfahren durchzuführen.

Die zum Verfahren beschriebenen Merkmale und Vorteile gelten gleichermaßen für die Steuereinheit und umgekehrt.

Die Steuereinheit ist beispielsweise die Steuereinheit wenigstens eines der Verarbeitungsgeräte, insbesondere eines Gargeräts.

Ferner wird die Aufgabe gelöst durch ein Computerprogramm mit Programmcodemitteln, die die Schritte eines zuvor beschriebenen Verfahrens ausführen, wenn das Computerprogramm auf einem Computer oder einer entsprechenden Steuereinheit ausgeführt wird, insbesondere auf einer zuvor beschriebenen Steuereinheit.

Unter "Programmcodemitteln" sind dabei und im Folgenden computerausführbare Instruktionen in Form von Programmcode und/oder Programmcodemodulen in kompilierter und/oder in unkompilierter Form zu verstehen, die in einer beliebigen Programmiersprache und/oder in Maschinensprache vorliegen können.

Ferner wird die Aufgabe durch einen computerlesbaren Datenträger gelöst, auf dem ein zuvor beschriebenes Computerprogramm gespeichert ist.

Die zum Verfahren und/oder zur Steuereinheit beschriebenen Merkmale und Vorteile gelten gleichermaßen für das Computerprogramm und den computerlesbaren Datenträger und umgekehrt.

Die bestimmten Ziel-Prozessparameter können anschließend zur Regelung bzw. Steuerung des Verarbeitungsgeräts und/oder des Verarbeitungsprozesses herangezogen werden.

Beispielsweise sind/ist das Produkt ein Lebensmittel; das Verarbeitungsgerät ein Zubereitungsgerät, wie ein Gargerät; der Verarbeitungsprozess ein Zubereitungsprozess; eine Verarbeitungsphase eine Zubereitungsphase; ein Verarbeitungsschritt ein Zubereitungsschritt; das Prozessergebnis ein Zubereitungsergebnis; die Prozessparameter Zubereitungsparameter; der Prozessraum ein Zubereitungsraum; die Prozessumgebung eine Zubereitungsumgebung, wie das Klima im Zubereitungsraum; die Umgebungsparameter Klimaparameter; das Umgebungsmodul ein Klimamodul; und/oder das Prozessergebnismodul ein Zubereitungsergebnismodul. Diese Begriffe können durch die gesamte Anmeldung und Ansprüche hinweg substituiert werden, um eine Beschreibung eines speziellen Ausführungsbeispiels zu erhalten.

Weitere Merkmale und Vorteile der Erfindung ergeben sich aus der nachfolgenden Beschreibung sowie aus den beigefügten Zeichnungen, auf die Bezug genommen wird.

Aufzählungen mehrerer Komponenten mit "und/oder", z.B. "A, B und/oder C" sind als eine Offenbarung einer beliebigen Kombination der Komponenten zu verstehen, d.h. als "A und/oder B und/oder C".

In den Zeichnungen zeigen:
- Figur 1 ein Verarbeitungsgerät mit einer erfindungsgemäßen Steuereinheit zur Durchführung des erfindungsgemäßen Verfahrens schematisch,
- die Figuren 2a und 3a Veranschaulichungen der Eingabedaten eines der Vorhersagemodule der Steuereinheit gemäß Figur 1 zu verschiedenen Zeitpunkten,
- die Figuren 2b und 3b Ausgaben des Vorhersagemoduls als Reaktion auf die Eingabedaten der Figuren 2a bzw. 3a,
- Figur 4a Eingabedaten eines ersten künstlichen neuronalen Netzwerks eines Vorhersagemoduls einer zweiten erfindungsgemäßen Ausführungsform des Verfahrens bzw. der Steuereinheit,
- Figur 4b Eingabedaten eines zweiten künstlichen neuronalen Netzwerks eines Vorhersagemoduls gemäß der zweiten Ausführungsform des Verfahrens bzw. der Steuereinheit,
- Figur 4c Veranschaulichungen von Ausgabedaten des zweiten künstlichen neuronalen Netzwerks, das die Eingabedaten gemäß Figur 4b erhält,
- Figur 5 eine schematische Darstellung von Teilen einer weiteren Ausführungsform eines erfindungsgemäßen Verfahrens, und
- Figur 6 eine schematische Darstellung eines komplexen Verarbeitungsprozesses unter Verwendung mehrerer Verarbeitungsgeräte.

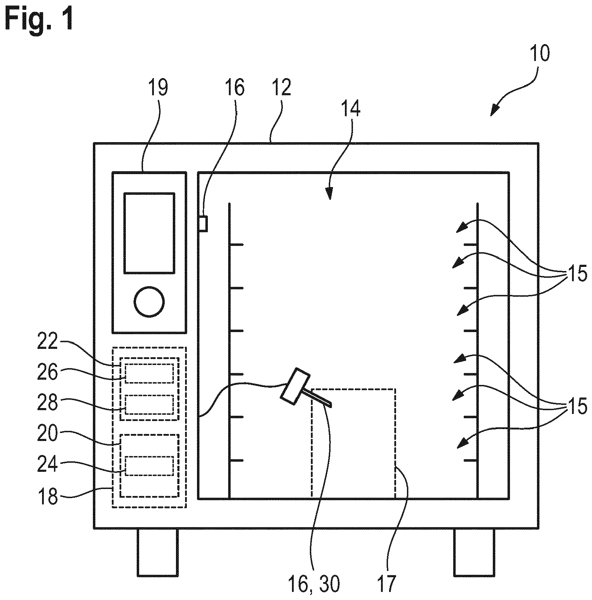

In Figur 1 ist schematisch ein Verarbeitungsgerät 10, hier in Form eines Gargeräts 12, gezeigt.

Das Verarbeitungsgerät 10 ist für den Profieinsatz in Restaurants, Kantinen, Großküchen und der Großgastronomie vorgesehen. Es kann sich hier beispielsweise um einen Kombidämpfer handeln, der unterschiedliche Speisen mit Heißluft und/oder Heißdampf zubereiten kann. Zusätzlich kann das Verarbeitungsgerät 10 eine Mikrowellenquelle zum Verarbeiten von Produkten mittels Mikrowellen aufweisen.

Denkbar ist jedoch auch, dass es sich bei dem Verarbeitungsgerät 10 um ein Lackiergerät, zum Beispiel zum Trocknen des Lacks, um einen Ofen zum Brennen von Keramik oder anderen Werkstoffen oder um Herstellungsgeräte für Chemikalien oder Pharmazeutika handelt.

Im gezeigten Ausführungsbeispiel hat das Verarbeitungsgerät 10 einen Garraum bzw. Prozessraum 14, in dem mehrere Einschübe 15 vorgesehen sind, mehrere Sensoren 16 zur Messung eines Umgebungsparameters und/oder Produktparameters, mehrere Komponenten 17 zur Erzeugung einer gewünschten Prozessumgebung im Prozessraum 14, eine Steuereinheit 18 sowie Ein-/Ausgabemittel 19.

Die Sensoren 16 sind beispielsweise Feuchtigkeitssensoren, optische Sensoren und/oder Temperatursensoren, wie ein Kerntemperaturfühler 30.

Die Komponenten 17 sind beispielsweise eine Heizvorrichtung, eine Mikrowellenquelle, ein Lüfterrad und/oder ein Dampferzeuger.

Die Komponenten 17 werden von der Steuereinheit 18 derart gesteuert, dass sich im Prozessraum 14 eine gewünschtes Umgebung zum Verarbeiten des Produkts einstellt.

Die Steuereinheit 18 enthält hierzu einen computerlesbaren Datenträger, auf dem ein Computerprogramm gespeichert ist, das, wenn es ausgeführt wird, eines der erfindungsgemäßen Verfahren durchführt.

Die Umgebung, z.B. das Klima im Prozessraum 14 wird beispielsweise durch Umgebungsparameter charakterisiert, wie die Temperatur, z.B. in der Mitte des Prozessraumes 14, und/oder die Feuchte im Prozessraum 14, aber auch die Intensität von Mikrowellen- und/oder Infrarotstrahlung.

Das Klima und somit die Umgebungsparameter werden in der Regel überwiegend mittels der Komponenten 17 beeinflusst, sodass Kontrollparameter der Komponenten 17, wie die Lüfterdrehzahl oder die Heizleistung, die Umgebungsparameter beeinflussen. Eine Steuerung oder Regelung der Umgebung im Prozessraum 14 ist daher mittels der Umgebungsparameter oder der Kontrollparameter oder einer Kombination von beiden möglich. Im Folgenden wird zur Vereinfachung lediglich von Umgebungsparametern gesprochen, wobei hierbei auch immer entsprechende Kontrollparameter gemeint sind.

In anderen Worten sind Umgebungsparameter bzw. Parameter der Prozessumgebung Werte bzw. Parameter, die die Eigenschaften der Umgebung des Produkts also der Prozessumgebung und keine Eigenschaften des Produkts selbst beschreiben.

Im Gegensatz zu den Umgebungsparametern stehen die Parameter des Produkts. Dies sind Eigenschaften des Produkts selbst, also Parameter, die auch nach Entnahme des Produkts aus dem Prozessraum vorhanden sind. Diese Parameter sind beispielsweise die Kerntemperatur des Produkts und die Bräunung des Produkts. Die Produktparameter sind wesentlich für die Qualität und Sicherheit des Prozessergebnisses und definieren es. Die Steuereinheit 18 ist dazu ausgebildet, die Verarbeitung derart durchzuführen, dass das Produkt am Ende des Verarbeitungsprozesses, das heißt das Prozessergebnis, gewünschte Produktparameter aufweist.

Hierzu regelt bzw. steuert die Steuereinheit 18 die Komponenten 17 des Verarbeitungsgeräts 10, um das gewünschte Prozessergebnis zu erzielen. Hierbei berücksichtigt die Steuereinheit 18 eine Vielzahl von Prozessparametern. Die erwähnten Umgebungsparameter und Produktparameter sind Beispiele für solche Prozessparameter.

Allgemein wird unter einem Prozessparameter jeder Parameter verstanden, der einen Einfluss auf das Prozessergebnis hat. Dies können unter anderem Parameter der Umwelt des Verarbeitungsgeräts 10, Parameter des Verarbeitungsgeräts 10 selbst, Umgebungsparameter, Produktparameter und/oder die Platzierung des Produkts im Verarbeitungsgerät 10 selbst sein.

Dabei existieren verschiedene Typen von Prozessparametern, nämlich kontrollierte Prozessparameter, zeitunabhängige Prozessparameter, gemessene Prozessparameter und verborgene Prozessparameter.

Kontrollierte Prozessparameter sind solche Parameter, die durch wenigstens eine Komponente 17 des Verarbeitungsgeräts 10 beeinflusst und kontrolliert werden können.

Ein einfaches Beispiel ist die Temperatur oder die Feuchte im Prozessraum 14. Insbesondere wird eine oder mehrere Komponenten 17 von der Steuereinheit 18 derart kontrolliert, dass der kontrollierte Prozessparameter stets einem vorgegebenen Wert entspricht. Dementsprechend kann ein kontrollierter Prozessparameter auch in der Zukunft als bekannt angenommen werden.

Zeitunabhängige Prozessparameter sind Konstanten, die durch äußere Gegebenheiten vorgegeben sind und sich über den Zeitraum eines Verarbeitungsprozesses nicht wesentlich ändern. Somit sind auch die zeitunabhängigen Prozessparameter in der Zukunft bekannt.

Beispiele für zeitunabhängige Prozessparameter sind die Größe des Prozessraums des Verarbeitungsgeräts 10, beispielsweise des Prozessraums 14, der Gerätetyp des Verarbeitungsgeräts 10, die Umgebungstemperatur des Verarbeitungsgeräts 10, der Typ bzw. die Klasse des Produkts, die Platzierung des Produkts im Verarbeitungsgerät 10, zum Beispiel in einem bestimmten Einschub 15, oder aber auch die Höhe des Aufstellorts des Verarbeitungsgeräts 10 über dem Meeresspiegel.

Sofern zeitunabhängige Prozessparameter nicht aus Spezifikationen entnommen werden können, reicht in der Regel eine einmalige Messung vor dem Verarbeitungsprozess aus.

Gemessene Prozessparameter können durch einen Sensor 16 des Verarbeitungsgeräts 10 gemessen werden, sind jedoch nur indirekt durch eine Komponente 17 des Verarbeitungsgeräts 10 zu beeinflussen. Der Wert eines gemessenen Prozessparameters ist daher nur zuverlässig durch eine Messung zu ermitteln. Eine Ableitung des Wertes eines gemessenen Prozessparameters anhand von Kontrollparametern ist nicht zuverlässig möglich.

Dementsprechend stehen ad hoc keine Informationen über zukünftige Werte eines gemessenen Prozessparameters zur Verfügung.

Beispielsweise ist die Kerntemperatur des Produkts ein gemessener Prozessparameter, der für die Vergangenheit durch Messwerte bekannt ist, für die Zukunft jedoch nicht.

Verborgene Prozessparameter werden üblicherweise nicht durch einen Sensor 16 des Verarbeitungsgeräts 10 gemessen, insbesondere da geeignete Sensoren 16 zur Messung nicht vorhanden, komplex oder kostspielig sind. Verborgene Prozessparameter sind beispielsweise Eigenschaften des Produkts, insbesondere sensorische Eigenschaften wie die Bräunung oder Knusprigkeit.

Alle diese Prozessparameter nehmen direkt oder indirekt Einfluss auf das Prozessergebnis oder sind Qualitätsmaße für das Prozessergebnis.

Zum Verarbeiten eines Produkts wird üblicherweise ein Verarbeitungsprozess von der Steuereinheit 18 durchgeführt.

Ein Verarbeitungsprozess ist im Rahmen dieser Erfindung im einfachsten Fall eine Abfolge eines zeitlichen Soll-Verlaufs eines Umgebungsparameters bzw. eines Kontrollparameters, der den wenigstens einen Umgebungsparameter beeinflusst. Allgemeiner formuliert ist ein Verarbeitungsprozess ein Soll-Verlauf wenigstens eines kontrollierten Prozessparameters.

Üblicherweise enthält ein Verarbeitungsprozess jedoch Soll-Verläufe für mehrere kontrollierte Prozessparameter, wobei die Soll-Verläufe jedoch in Abhängigkeit von zeitunabhängigen Prozessparametern, gemessenen Prozessparametern und verborgenen Prozessparametern angepasst werden können.

Ein Verarbeitungsprozess kann auch verschiedene Verarbeitungsphasen enthalten, die unterschiedliche Sollwerte für die kontrollierten Prozessparameter aufweisen. Beispielsweise enthält der Verarbeitungsprozess zur Zubereitung eines Bratens zunächst eine Verarbeitungsphase, die einem Anbraten des Produkts entspricht, und anschließend eine Garphase, die dem Durchgaren des Produkts entspricht.

Die verschiedenen Verarbeitungsphasen können im gleichen Verarbeitungsgerät 10 durchgeführt werden. Denkbar ist jedoch auch, dass verschiedene Verarbeitungsphasen in verschiedenen Verarbeitungsgeräten 10 durchgeführt werden.

Ein Verarbeitungsprozess hat zudem einen oder normalerweise mehrere gewünschte Ziel-Prozessparameter, das heißt einen Wert eines Prozessparameters, der am Ende des Verarbeitungsprozesses erreicht werden soll. Dies sind üblicherweise Produktparameter, die das Produkt nach der Verarbeitung aufweisen soll, beispielsweise eine bestimmte Kerntemperatur in Kombination mit einer vorgegebenen Bräunung.

Die Soll-Verläufe des Verarbeitungsprozesses sind entsprechend derart gewählt, dass der bzw. die Prozessparameter den Wert des gewünschten Ziel-Prozessparameters erreichen, wenn der Verarbeitungsprozess weiter ohne Änderung, auch ohne Änderung der äußeren Einflüsse durchgeführt wird.

Die Steuereinheit 18 steuert dabei die Komponenten 17, ggf. auch die Komponenten 17 anderer Verarbeitungsgeräte 10 derart an, dass der Verarbeitungsprozess durchgeführt wird, d.h. die Prozessparameter den Soll-Verläufen möglichst exakt entsprechen.

Die Steuereinheit 18 kann die Verarbeitungsprozesse bzw. die Soll-Verläufe anpassen, um trotz unvorhergesehener Ereignisse oder Abweichungen das Prozessergebnis - definiert durch gewünschte Ziel-Prozessparameter - zu erreichen. Dazu ist es notwendig, das Prozessergebnis zu bestimmen, das voraussichtlich erhalten wird, wenn der aktuelle Verarbeitungsprozess unverändert bis zum Ende durchgeführt würde. Hierzu ist eine Vorhersage des Prozessergebnisses von Nöten.

Dabei wird das Prozessergebnis durch die Vorhersage von Werten der Ziel-Prozessparameter bestimmt. Diese können dann mit den gewünschten Ziel-Prozessparametern verglichen werden.

Zur Durchführung des Verarbeitungsprozesses weist die Steuereinheit 18 daher wenigstens ein Vorhersagemodul auf, im gezeigten Ausführungsbeispiel ein erstes Vorhersagemodul 20 und ein zweites Vorhersagemodul 22.

Das erste Vorhersagemodul 20 hat ein erstes künstliches neuronales Netzwerk 24 und das zweite Vorhersagemodul 22 hat ein erstes künstliches neuronales Netzwerk 26 sowie ein zweites künstliches neuronales Netzwerk 28.

Die künstlichen neuronalen Netzwerke 24, 28 weisen wenigstens einen Convolutional Layer auf.

Die künstlichen neuronalen Netzwerke 24, 26, 28 weisen wenigstens einen Recurrent Layer auf. Der Recurrent Layer ist zum Beispiel ein Basic Recurrent Layer, wenigstens ein Long Short-Term Memory Layer, wenigstens ein Gated Recurrent Unit Layer und/oder wenigstens ein Minimal Gated Unit Layer.

Dabei umfasst der Minimal Gated Unit Layer beispielsweise zwischen 50 und 100 Units.

Zum Beispiel entspricht die Anzahl der Einheiten im Convolutional Layer der Anzahl an zu bestimmenden Ziel-Prozessparametern des Verarbeitungsprozesses.

Die Steuereinheit 18 kann die Vorhersagemodule 20, 22, insbesondere den jeweiligen künstlichen neuronalen Netzwerken 24, 26, 28 Werte von Prozessparametern zur Verarbeitung bereitstellen.

Dabei wird zwischen Vergangenheitswerten und Zukunftswerten unterschieden, wobei Vergangenheitswerte eines Prozessparameters Werte des jeweiligen Prozessparameters zum aktuellen Zeitpunkt oder zu einem Zeitpunkt in der Vergangenheit, das heißt vor dem Gegenwartszeitpunkt sind.

Zukunftswerte eines Prozessparameters sind entsprechend gemessene oder anderweitig bestimmte Wert des jeweiligen Prozessparameters zu einem Zeitpunkt in der Zukunft, das heißt nach dem Gegenwartszeitpunkt.

Im Falle von gemessenen Prozessparametern sind die Vergangenheitswerte die im Laufe des verstrichenen Verarbeitungsprozesses durchgeführten Messwerte. Zukunftswerte von gemessenen Prozessparametern sind entsprechend nicht vorhanden.

Im Falle von kontrollierten Prozessparametern können die Vergangenheitswerte auch Messwerte des entsprechenden Prozessparameters des bisher vergangenen Verarbeitungsprozesses sein. Die Vergangenheitswerte können jedoch auch direkt aus dem Verarbeitungsprozess entnommen werden, das heißt, dass als Vergangenheitswerte von kontrollierten Prozessparametern die Soll-Werte des bisher vergangenen Verarbeitungsprozesses verwendet werden.

Für die Zukunftswerte eines kontrollierten Prozessparameters werden die Soll-Werte des Verarbeitungsprozesses nach dem Gegenwartszeitpunkt verwendet.

Für zeitunabhängige Prozessparameter sind die Zukunftswerte gleich den Vergangenheitswerten. Sie sind Spezifikationen entnommen bzw. einmalig gemessen.

Für verborgene Prozessparameter sind weder Vergangenheitswerte noch Zukunftswerte bekannt. Falls solche Werte als Eingabedaten für die künstlichen neuronalen Netzwerke 24, 26, 28 verwendet werden sollen, müssen diese zuvor abgeschätzt bzw. bestimmt werden.

Im gezeigten Ausführungsbeispiel werden zwei Ziel-Prozessparameter bestimmt, nämlich die Bräunung Z₁ und die Kerntemperatur Z₂.

Die Bräunung ist ein verborgener Prozessparameter und die Kerntemperatur ist ein gemessener Prozessparameter.

Um mit einem einzigen künstlichen neuronalen Netzwerk die Ziel-Prozessparameter zu bestimmen, beispielsweise mit dem ersten künstlichen neuronalen Netzwerk 24 des ersten Vorhersagemoduls 20, werden dem künstlichen neuronalen Netzwerk Eingangsdaten aus verschiedenen Prozessparametern von der Steuereinheit 18 bereitgestellt.

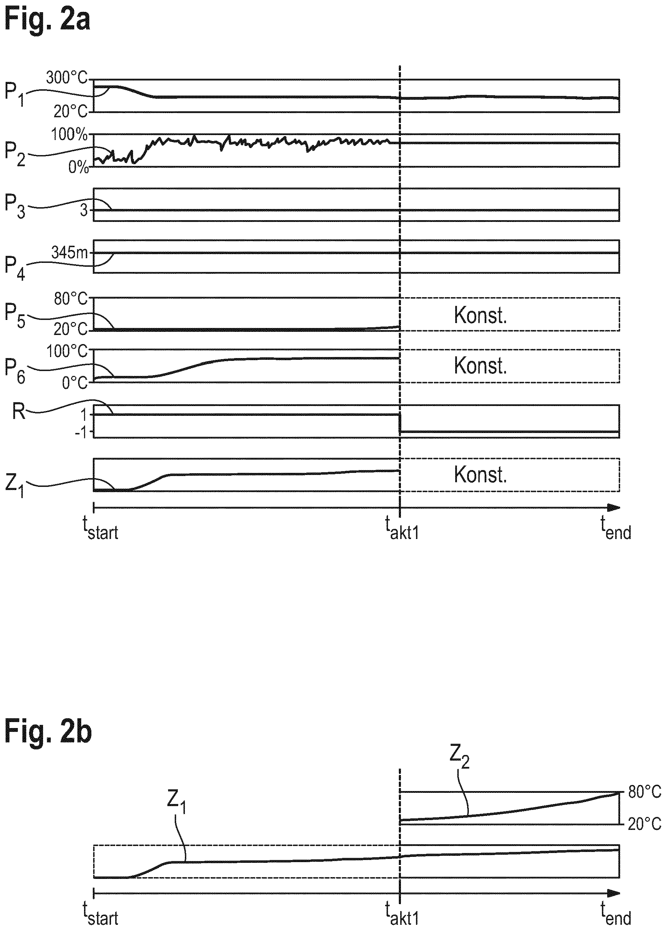

Figur 2a veranschaulicht die dem künstlichen neuronalen Netzwerk 24 bereitgestellten Eingangsdaten zum Gegenwartszeitpunkt tₐₖₜ₁.

Im gezeigten Beispiel werden vier erste Prozessparameter P₁, P₂, P₃ und P₄ bereitgestellt, von denen jeweils die Vergangenheitswerte und die Zukunftswerte an das künstliche neuronale Netzwerk 24 übergeben werden.

Zudem werden zwei zweite Prozessparameter P₅, P₆ bereitgestellt, von denen lediglich Vergangenheitswerte vorliegen.

Zudem wird eine Referenzzeitspur R an das künstliche neuronale Netzwerk 24 übergeben.

Denkbar ist auch, dass Vergangenheitswerte des Ziel-Prozessparameters Z₁ als Eingangsdaten übergeben werden. Diese sind jedoch aus vorherigen Iterationen des Verfahrens abgeschätzt bzw. bestimmt und daher keine gemessenen Werte. Dementsprechend sind sie in Figur 2a gestrichelt dargestellt.

Die ersten und zweiten Prozessparameter P₁ - P₆ und die Referenzzeitspur R werden als Zeitspur, insbesondere gleicher Länge an das künstliche neuronale Netzwerk 24 übergeben.

Eine Zeitspur ist dabei zum Beispiel eine Reihe von diskreten Werten des entsprechenden Prozessparameters zu verschiedenen Zeitpunkten in chronologischer Reihenfolge zwischen einem Startzeitpunkt tₛₜₐᵣₜ und einem Endzeitpunkt t_{end} des Verarbeitungsprozesses. Die Werte haben beispielsweise einen regelmäßigen Abstand.

Für Prozessparameter, die keine bekannten Zukunftswerte haben bzw. bei denen die Zukunftswerte nicht übergeben werden, werden die in der Zukunft - das heißt nach dem Gegenwartszeitpunkt Tₐₖₜ₁ - liegenden Werte mit einem konstanten Wert aufgefüllt. Dies sind beispielsweise Nullen oder ein für den jeweiligen Prozessparameter typischer Wert. Dies ist in den Figuren durch das Wort "konst." veranschaulicht.

Auf diese Weise, d.h. durch Festsetzen eines konstanten Wertes als Zukunftswert, können auch die (gemessenen) Vergangenheitswerte des Ziel-Prozessparameters Z₁ als (vollständige) Zeitspur vorliegen (in Fig. 2a durch Rechtecke mit gestrichelten Linien illustriert).

In dem in Figur 2a gezeigten Ausführungsbeispiel ist der erste Prozessparameter P₁ die Temperatur innerhalb des Prozessraums 14. Hierbei handelt es sich um einen kontrollierten Prozessparameter. Für die Vergangenheitswerte und die Zukunftswerte werden die Soll-Werte aus dem Verarbeitungsprozess verwendet.

Der erste Prozessparameter P₂ ist die Feuchte innerhalb des Prozessraums 14. Auch hierbei handelt es sich um einen kontrollierten Prozessparameter. Jedoch wurden für die Vergangenheitswerte die gemessenen Werte der Feuchte im Prozessraum 14 verwendet und lediglich für die Zukunftswerte die Soll-Werte aus dem Verarbeitungsprozess.

Statt der Soll-Werte können auch die Vorhersagewerte eines vorgeschalteten künstlichen neuronalen Netzwerks als erste Prozessparameter verwendet werden. Bezüglich des vorgeschalteten neuronalen Netzwerks handelt es sich bei P₂ um einen Ziel-Prozessparameter.

Die ersten Prozessparameter P₃ und P₄ sind zeitunabhängige Prozessparameter, nämlich die Platzierung des Produkts im Prozessraum 14, ausgedrückt durch die Zahl des Einschubs, hier der dritte Einschub, und die Höhe des Verarbeitungsgerätes 10 über Normalnull, hier 345 m.

Der zweite Prozessparameter P₅ ist ein gemessener Prozessparameter, hier die Kerntemperatur, die mittels des Kerntemperaturfühlers 30 ermittelt wurde.

Der zweite Prozessparameter P₆ ist der Taupunkt der Luft im Prozessraum 14, der ebenfalls mittels Sensoren bzw. Komponenten des Verarbeitungsgeräts 10 gemessen wurde.

Die Referenzzeitspur R nimmt lediglich zwei Werte an. Die Vergangenheitswerte, das heißt sämtliche Werte vor und gleich dem Gegenwartszeitpunkt tₐₖₜ₁, haben den Wert 1 und die Zukunftswerte nach dem Gegenwartszeitpunkt tₐₖₜ₁ haben den Wert -1. Auf diese Weise wird codiert, welche Werte der Zeitspuren der übergebenen Prozessparameter P₁ bis P₆ und des Ziel-Prozessparameters Z₁ Vergangenheitswerte sind, nämlich solche, bei denen die Referenzzeitspur den Wert 1 hat, und welche Werte Zukunftswerte sind, nämlich solche, bei denen die Referenzzeitspur den Wert -1 hat.

Anhand dieser in Figur 2a gezeigten Eingangsdaten bestimmt das künstliche neuronale Netzwerk 24 nun die in Figur 2b gezeigten Ziel-Prozessparameter Z₁ und Z₂, also die Bräunung des Garguts und die Kerntemperatur des Garguts für zumindest den Endzeitpunkt t_{end} des Verarbeitungsprozesses, insbesondere jedoch für alle zukünftigen Zeitpunkte. Es handelt sich somit um eine Vorhersage.

Hierzu wurde das künstliche neuronale Netzwerk 24 durch überwachtes Lernen mit Trainingsdatensätzen zuvor trainiert, wobei die Trainingsdatensätze Eingangs-Trainingsdaten und zugehörige Ergebnisdaten aufweisen.

Die Trainingsdatensätze sind beispielsweise mittels einer Simulation der Prozessumgebung und des Produkts ermittelt worden, beispielsweise mittels der Finite-Elemente-Methode oder mittels numerischer Strömungsmechanik (Computational Fluid Dynamics - CFD).

Aus der Simulation können somit Vergangenheitswerte und Zukunftswerte des wenigstens einen ersten Prozessparameters P₁ bis P₄ sowie Vergangenheitswerte des wenigstens einen zweiten Prozessparameters P₅, P₆ als Eingangs-Trainingsdaten entnommen werden und entsprechend die Werte der Ziel-Prozessparameter Z₁, Z₂ für zukünftige Zeitpunkte als Ergebnisdaten entnommen werden.

Beim Training werden zunächst die Eingangs-Trainingsdaten wenigstens eines Trainingsdatensatzes durch das künstliche neuronale Netzwerk 24 vorwärts gespeist, das somit Werte der Ziel-Prozessparameter Z₁, Z₂ für zukünftige Zeitpunkte bestimmt.

Anschließend wird ein Fehler zwischen den bestimmten Werten der Ziel-Prozessparameter Z₁, Z₂ und den Werten der zugehörigen Ergebnisdaten des entsprechenden Trainingsdatensatzes ermittelt. Der Gradient der Gewichtungsfaktoren und der Schwellwerte des künstlichen neuronalen Netzwerks 24 bezüglich des Fehlers wird durch Rückwärtsspeisen des künstlichen neuronalen Netzwerks 24 berechnet.

Schließlich werden die Gewichtungsfaktoren und Schwellwerte des künstlichen neuronalen Netzwerks 24 durch einen an sich bekannten Optimierungsalgorithmus angepasst.

Die Gewichtungsfaktoren und Schwellwerte werden somit iterativ für jeden Trainingsdatensatz oder für Gruppen von Trainingsdatensätzen angepasst, bis die gewünschte Vorhersagequalität erreicht ist.

Während des Betriebs bestimmt das künstliche neuronale Netzwerk 24 zudem die Vergangenheitswerte der Bräunung Z₁, also die Vergangenheitswerte eines der Ziel-Prozessparameter, der ein verborgener Prozessparameter ist. Die auf diese Weise bestimmten Vergangenheitswerte sind lediglich eine Abschätzung, können jedoch für den nächsten Zeitpunkt als Teil der Eingangsdaten verwendet werden.

Mithilfe der vorhergesagten zukünftigen Werte der Ziel-Prozessparameter kann die Steuereinheit 18 nun Einfluss auf den Verarbeitungsprozess nehmen, beispielsweise dadurch, dass der zukünftige Soll-Verlauf eines oder mehrerer verschiedener Umgebungsparameter bzw. Kontrollparameter verändert werden.

Dies kann dann geschehen, wenn die vorhergesagten Ziel-Prozessparameter nicht dem gewünschten Prozessergebnis entsprechen, also den gewünschten Ziel-Prozessparametern. Beispielsweise kann die Steuereinheit 18 die Temperatur innerhalb des Prozessraums 14 erhöhen bzw. die Zeit des Verarbeitungsprozesses verlängern, wenn der Ziel-Prozessparameter Kerntemperatur Z₂ am Ende des Verarbeitungsprozesses als zu niedrig vorhergesagt wurde.

Der Vergleich, ob die vorhergesagten Ziel-Prozessparameter dem gewünschten Prozessergebnis genügend entsprechen, kann insbesondere durch eine Kostenfunktion geschehen, die einen Kostenwert bestimmt, der schließlich mit einem Schwellwert verglichen wird.

In anderen Worten werden die bestimmten Ziel-Prozessparameter zur Steuerung des Verarbeitungsprozesses, insbesondere des Verarbeitungsgerätes 10 verwendet.

Selbstverständlich können die Ziel-Prozessparameter Z₁, Z₂ zu einem späteren Zeitpunkt erneut bestimmt werden. Insbesondere werden die Ziel-Prozessparameter Z₁, Z₂ regelmäßig bestimmt.

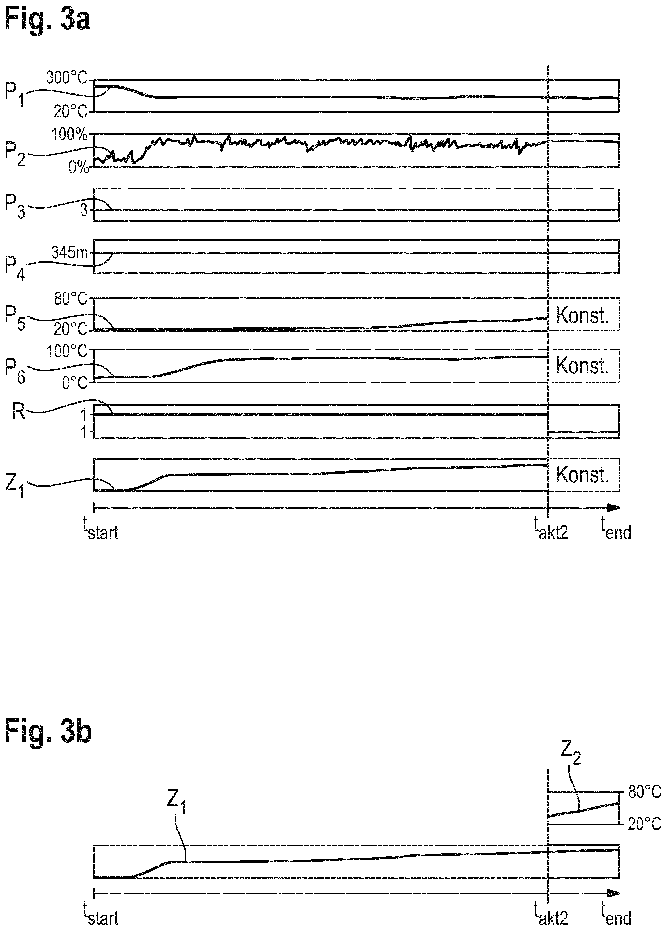

Die Figuren 3a und 3b entsprechen den Figuren 2a und 2b, wobei nun die Eingangsdaten bzw. Ausgangsdaten des künstlichen neuronalen Netzwerks 24 zu einem Gegenwartszeitpunkt tₐₖₜ₂ veranschaulicht sind, der nach dem Gegenwartszeitpunkt tₐₖₜ₁ der Figuren 2a, 2b liegt.

Gut zu erkennen ist, dass sich die Längen der einzelnen Zeitspuren der Prozessparameter P₁ bis P₆ und der Referenzzeitspur R nicht verändert haben, lediglich der Anteil an Vergangenheitswerten und Zukunftswerten innerhalb einer Zeitspur hat sich verschoben.

Dementsprechend gehen mehr Vergangenheitswerte der zweiten Prozessparameter P₅, P₆, also der Kerntemperatur und des Taupunktes ein. In den Ausgangswerten verringert sich ebenfalls die Anzahl an Werten für zukünftige Zeitpunkte, die für die Ziel-Prozessparameter Z₁, Z₂ bestimmt wird.

Auch mittels des zweiten Vorhersagemoduls 22 können Ziel-Prozessparameter für zukünftige Zeitpunkte bestimmt werden. Das zweite Vorhersagemodul 22 kann als alternative Ausführungsform des ersten Vorhersagemoduls 20 angesehen werden. Die Vorhersagemodule 20, 22 können jedoch auch gleichzeitig in Kombination miteinander verwendet werden.

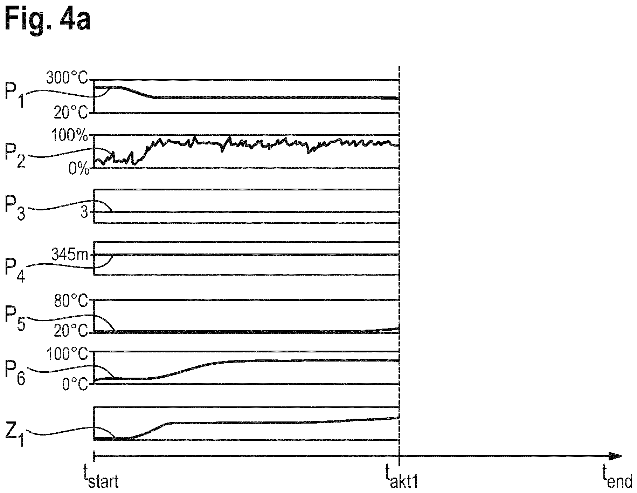

Die Funktionsweise des zweiten Vorhersagemoduls 22 entspricht im Wesentlich der des ersten Vorhersagemoduls 20 und wird anhand der Figuren 4a bis 4c erläutert, wobei lediglich auf die Unterschiede zur Funktionsweise des ersten Vorhersagemoduls 20 eingegangen wird. Insbesondere werden die gleichen Typen von Prozessparameter verwendet und das Training der künstlichen neuronalen Netzwerke läuft gleich ab.

Figur 4a veranschaulicht die Eingangsparameter des ersten künstlichen neuronalen Netzwerks 26 des zweiten Vorhersagemoduls 22.

Im Unterschied zum ersten Vorhersagemodul 20 erhält das erste künstliche neuronale Netzwerk 26 des zweiten Vorhersagemoduls 22 lediglich Vergangenheitswerte der ersten Prozessparameter P₁ bis P₄, optional Vergangenheitswerte der zweiten Prozessparameter P₅ und P₆ und beispielsweise auch Vergangenheitswerte des wenigstens einen Ziel-Prozessparameters Z₁.

Eine Referenzzeitspur R wird im zweiten Vorhersagemodul 22 nicht verwendet.

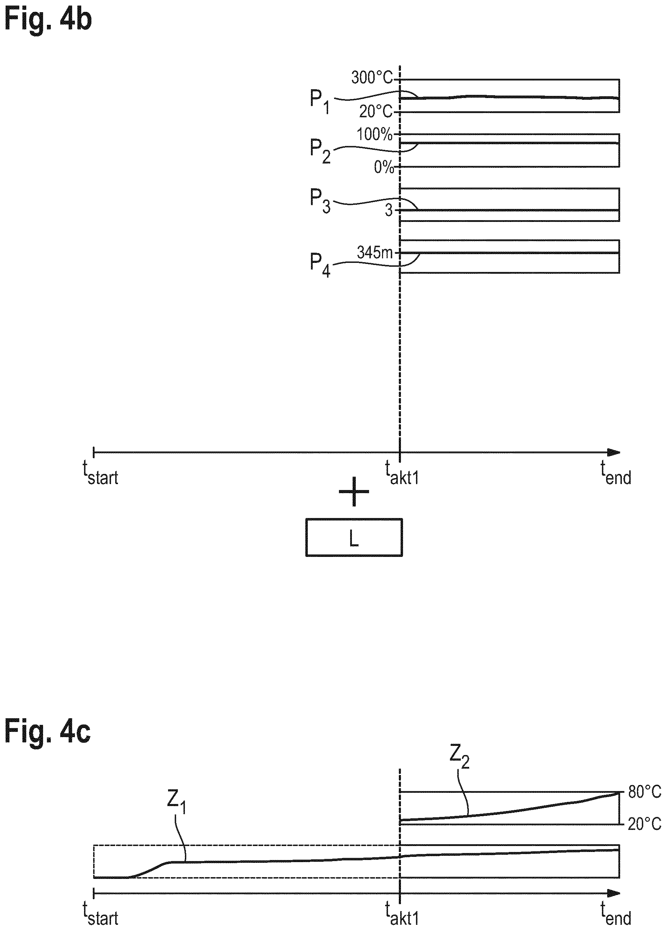

Das erste künstliche neuronale Netzwerk 26 ermittelt anhand dieser Eingangsdaten eine latente Variable L (Fig. 4b) und übergibt die latente Variable L an das zweite künstliche neuronale Netzwerk 28 des zweiten Vorhersagemoduls 22. Bei der latenten Variable handelt es sich um mindestens eine reelle Zahl, beispielsweise um einen Vektor mit fünf Komponenten.

Neben der latenten Variablen L erhält das zweite künstliche neuronale Netzwerk 28 zudem die Vergangenheitswerte und/oder die Zukunftswerte des wenigstens einen ersten Prozessparameters P₁ bis P₄. Diese Eingangsdaten sind in Figur 4b veranschaulicht.

Auf Grundlage dieser Eingangsdaten ermittelt das zweite künstliche neuronale Netzwerk 28 die Werte der Ziel-Prozessparameter Z₁, Z₂ für zukünftige Zeitpunkte, ähnlich dem ersten künstlichen neuronalen Netzwerk 24 des ersten Vorhersagemoduls 20.

Die beiden künstlichen neuronalen Netzwerke 26, 28 des zweiten Vorhersagemoduls 22 werden gemeinsam trainiert. Das heißt, das Training kann wie zuvor zum ersten Vorhersagemodul 20 beschrieben ablaufen, wobei die Eingangs-Trainingsdaten dem ersten künstlichen neuronalen Netzwerk 26 des zweiten Vorhersagemoduls 22 zugeführt werden und wobei die Ausgabedaten des zweiten künstlichen neuronalen Netzwerks 28 des zweiten Vorhersagemoduls 22, das heißt die Werte der Ziel-Prozessparameter Z₁, Z₂, mit den Ergebnisdaten verglichen werden.

Das zweite Vorhersagemodul 22 stellt also eine Art Autoencoder dar, in der das erste künstliche neuronale Netz 26 die Rolle des Encoders und das zweite künstliche neuronale Netz 28 die Rolle des Decoders erfüllt. Abweichend von üblichen Autoencodern werden dem Decoder zusätzlich zu der latenten Variable L auch Werte der ersten Prozessparameter zugeführt.

Außerdem lässt sich mittels der Vorhersagemodule 20, 22 die Stechung des Kerntemperaturfühlers 30 überwachen.

Ist der Ziel-Prozessparameter die Kerntemperatur des Produkts und wurden zuvor die Messwerte des Kerntemperaturfühlers 30 von der Steuereinheit 18 protokolliert, können die Messwerte des Kerntemperaturfühlers 30 mit den durch das Vorhersagemodul 20, 22 bestimmten Werten der Kerntemperatur verglichen werden.

Die Steuereinheit 18 kann anhand des Ergebnisses des Vergleiches bestimmen, ob der Kerntemperaturfühler 30 korrekt im Produkt eingesteckt ist oder nicht.

Beispielsweise vergleicht die Steuereinheit 18 die sich ergebenden Kurven aus den protokollierten Messwerten und den bestimmten Werten für vergangene Zeitpunkte. Ist die Abweichung dabei höher als ein vorgegebener Schwellwert, ist der Kerntemperaturfühler 30 nicht korrekt im Produkt gesteckt, d.h. es liegt eine Fehlstechung vor.

Wenn eine solche Fehlstechung durch die Steuereinheit 18 erkannt worden ist, ist es denkbar, dass das entsprechende Vorhersagemodul 20, 22 anstelle der Messwerte des Kerntemperaturfühlers 30 die durch das Vorhersagemodul 20, 22 bestimmten Werte zur weiteren Steuerung bzw. Regelung erhält. In anderen Worten werden die Vergangenheitswerte des Prozessparameters "Kerntemperatur" nun durch das Vorhersagemodul 20, 22 bestimmt und nicht mehr durch Messwerte des Kerntemperaturfühlers 30.

Denkbar ist selbstverständlich auch, dass das Vorhersagemodul 20, 22 bzw. eines der entsprechenden künstlichen neuronalen Netzwerke 24, 26, 28 auf Grundlage des Vergleichs ein Maß für die Güte der Stechung des Kerntemperaturfühlers 30 als Ziel-Prozessparameter ausgibt oder die tatsächliche Kerntemperatur des Produkts ausgibt.

Aus Gründen der Veranschaulichung wurden vom ersten Vorhersagemodul 20 und zweiten Vorhersagemodul 22 im beschriebenen Ausführungsbeispiel die Werte der gleichen Ziel-Prozessparameter Z₁, Z₂ unabhängig voneinander bestimmt.

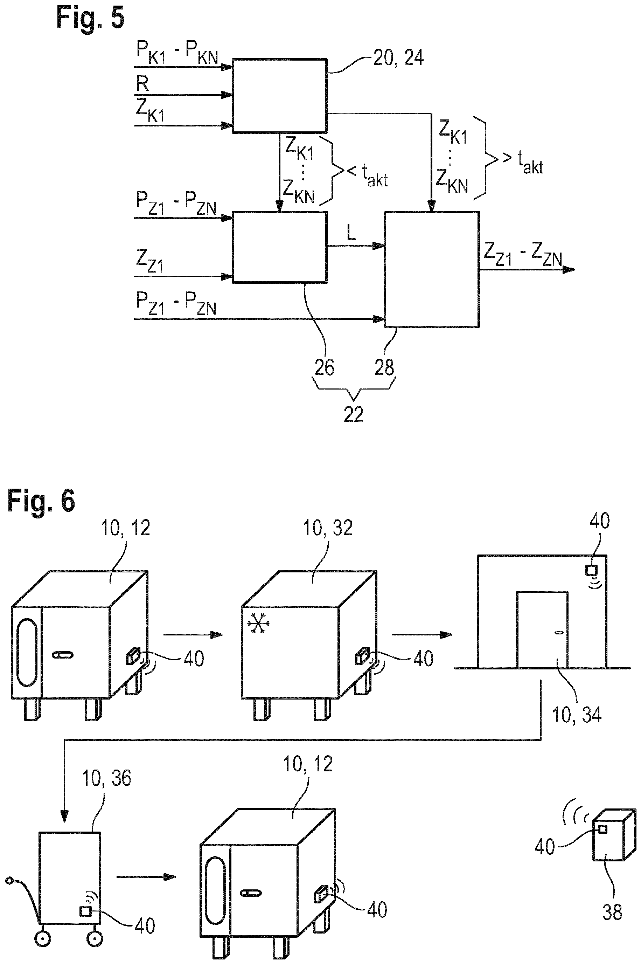

Zur Verbesserung der Präzision können das erste Vorhersagemodul 20 und das zweite Vorhersagemodul 22 auch hintereinander verwendet werden, wie in Figur 5 schematisch dargestellt ist.

In diesem Ausführungsbeispiel ist das erste Vorhersagemodul 20 ein Umgebungsmodul und das zweite Vorhersagemodul 22 ist ein Prozessergebnismodul.

Das Umgebungsmodul bzw. das erste Vorhersagemodul 20 zeichnet sich dadurch aus, dass als Ziel-Prozessparameter Z_{K1} - Z_{Kn} ein Umgebungsparameter bzw. ein Kontrollparameter, der den wenigstens einen Umgebungsparameter beeinflusst, bestimmt wird. Beispielsweise werden dem Umgebungsmodul bzw. dem ersten Vorhersagemodul 20 lediglich Umgebungsparameter als Prozessparameter P_{K1} - P_{Kn} zugeführt.

Das erste Vorhersagemodul 20 dient der Modellierung der Prozessumgebung, weshalb sich die im ersten Vorhersagemodul 20 verwendeten Prozessparameter in erster Linie auf die Eigenschaften und die Kontrollmöglichkeiten der Prozessumgebung beziehen. Insbesondere sind die Signale von Sensoren für Eigenschaften der Prozessumgebung 16 und Kontrollparameter für die Komponenten 17 wichtig. Ziel-Prozessparameter vom Vorhersagemodul 20 sind vor allem die direkt messbaren und die nicht direkt messbaren Eigenschaften der Prozessumgebung, die einen direkten Einfluss auf das Produkt haben.

Produktparameter sind für das Vorhersagemodul 20 nur dann relevant, wenn sich daraus ein Einfluss auf die Prozessumgebung ableiten lässt. Beispielsweise hat eine große Produktoberfläche zur Folge, dass die Temperatur eines Garraums abgesenkt wird. Folglich sind Produktparameter, die mit der Produktoberfläche korrelieren, auch für das Vorhersagemodul 20 wichtig.

Das Prozessergebnismodul bzw. das zweite Vorhersagemodul 22 zeichnet sich dadurch aus, dass als Ziel-Prozessparameter Z_{Z1} bis Z_{Zn} wenigstens ein Produktparameter bestimmt wird. Beispielsweise werden dem Prozessergebnismodul bzw. dem zweiten Vorhersagemodul 22 als Prozessparameter P_{Z1} - P_{Zn} größtenteils, insbesondere ausschließlich Produktparameter zugeführt sowie wenigstens ein, insbesondere alle Ziel-Prozessparameter Z_{K1} - Z_{Kn} des Umgebungsmoduls.

Das zweite Vorhersagemodul 22 dient der Modellierung des Produkts, weshalb sich die dort verwendeten Prozessparameter in erster Linie auf die Eigenschaften des Produkts, sowie auf die Wirkung der Prozessumgebung auf das Produkt beziehen. Insbesondere sind die direkt messbaren und die nicht direkt messbaren Eigenschaften der Prozessumgebung, die einen direkten Einfluss auf das Produkt haben, sowie Signale, die das Produkt selbst beschreiben und Signale von Sensoren 30, die Produkteigenschaften überwachen, wichtig.

Ziel-Prozessparameter von Vorhersagemodul 22 sind vor allem diejenigen Produktparameter, anhand derer sich die Qualität des Prozessergebnisses beurteilen lässt.

Vereinfacht ausgedrückt ermittelt das Umgebungsmodul bzw. das erste Vorhersagemodul 20 eine Vorhersage für die zukünftige Umgebung, z.B. das zukünftige Klima, im Prozessraum 14 und übergibt diese Vorhersage an das Prozessergebnismodul bzw. das zweite Vorhersagemodul 22. Das Prozessergebnismodul ermittelt dann anhand der Vorhersage der Umgebung und von Produktparametern das Prozessergebnis, also den Zustand des Produkts am Ende des derzeit laufenden Verarbeitungsprozesses.

Im gezeigten Ausführungsbeispiel der Figur 5 weist das erste Vorhersagemodul 20 das erste künstliche neuronale Netzwerk 24 und das zweite Vorhersagemodul 22 das erste künstliche neuronale Netzwerk 26 und das zweite künstliche neuronale Netzwerk 28 auf.

Selbstverständlich ist es auch denkbar, dass beide Vorhersagemodule 20, 22 lediglich ein künstliches neuronales Netzwerk oder jeweils zwei künstliche neuronale Netzwerke aufweisen oder dass das erste Vorhersagemodul 20 zwei künstliche neuronale Netzwerke und das zweite Vorhersagemodul 22 nur ein künstliches neuronales Netzwerk hat.

Zur Bestimmung der Werte der Produktparameter als Ziel-Prozessparameter werden zunächst dem Umgebungsmodul, hier dem ersten Vorhersagemodul 20, in der zu den Figuren 2 und 3 beschriebenen Weise zunächst Werte der Prozessparameter P_{K1} - P_{Kn}, die insbesondere größtenteils, Umgebungsparameter sind, eine Referenzzeitspur R und gegebenenfalls die Vergangenheitswerte eines oder mehrerer der Ziel-Prozessparameter Z_{K1} des Umgebungsmoduls zugeführt.

Anhand dieser Eingangsdaten ermittelt das Umgebungsmodul wie zu den Figuren 2 und 3 erläutert die Werte des wenigstens einen Umgebungsparameters als Ziel-Prozessparameter Z_{K1} - Z_{Kn} und übergibt diese an das erste künstliche neuronale Netzwerk 26 des zweiten Vorhersagemoduls 22.

Neben den Werten der Umgebungsparameter bzw. Ziel-Prozessparameter Z_{K1} - Z_{Kn} des ersten Vorhersagemoduls 20, insbesondere die Vergangenheitswerte dieser Umgebungsparameter bzw. Ziel-Prozessparameter Z_{K1} - Z_{Kn} des ersten Vorhersagemoduls 20, erhält das erste künstliche neuronale Netzwerk 26 des zweiten Vorhersagemoduls 22 ähnlich wie zu Figur 4a beschrieben, auch weitere Prozessparameter P_{Z1} - P_{Zn} und gegebenenfalls Vergangenheitswerte eines oder mehrerer Ziel-Prozessparameter Z_{Z1}.

Wie zur Figur 4 beschrieben, ermittelt das erste künstliche neuronale Netzwerk 26 des zweiten Vorhersagemoduls 22 nun eine latente Variable L und übergibt diese an das zweite künstliche neuronale Netzwerk 28 des zweiten Vorhersagemoduls 22.

Als Eingabedaten erhält das zweite künstliche neuronale Netzwerk 28, wie zu Figur 4b beschrieben, zudem die Vergangenheitswerte und/oder die Zukunftswerte bestimmter Prozessparameter P_{Z1} - P_{Zn}, insbesondere Produktparameter, sowie Umgebungsparameter bzw. Ziel-Prozessparameter Z_{K1} - Z_{Kn} des ersten Vorhersagemoduls 20, insbesondere die Zukunftswerte dieser Umgebungsparameter bzw. Ziel-Prozessparameter Z_{K1} - Z_{Kn} des ersten Vorhersagemoduls 20.

Das zweite künstliche neuronale Netzwerk 28 ermittelt nun auf Grundlage der Vergangenheitswerte und/oder Zukunftswerte der Prozessparameter P_{Z1} - P_{Zn}, Umgebungsparameter bzw. Ziel-Prozessparameter Z_{K1} - Z_{Kn} des ersten Vorhersagemoduls 20, und/oder der latenten Variablen, wie zu den Figuren 4b und 4c beschrieben, Werte der wenigstens einen Ziel-Prozessparameters Z_{Z1} - Z_{Zn}, die insbesondere Produktparameter sind.

Die künstlichen neuronalen Netzwerke 24, 26 können zum Teil auch Vergangenheitswerte und/oder Zukunftswerte der gleichen Prozessparameter berücksichtigen, d.h. die Prozessparameter P_{Z1} - P_{Zn} und Prozessparameter P_{K1} - P_{Kn} sind nicht zwingend vollständig unterschiedliche Prozessparameter.

Auf diese Weise kann von der präzisen Bestimmung von Parametern durch künstliche neuronale Netzwerke sowohl zur Bestimmung der Umgebung als auch zur Bestimmung des Produktparameters Gebrauch gemacht werden, wodurch die Werte der bestimmten Produktparameter Z_{Z1} - Z_{Zn} für zukünftige Zeitpunkte besonders präzise ist.

In den zuvor beschriebenen Beispielen wurde lediglich ein Verarbeitungsgerät 10, nämlich ein Gargerät 12 verwendet, um das Produkt zu verarbeiten.

Diese Einschränkung diente jedoch lediglich der Veranschaulichung. In Figur 6 ist ein deutlich komplexerer Verarbeitungsprozess dargestellt, der in verschiedenen Verarbeitungsgeräten 10 durchgeführt wird.

Die verwendeten Verarbeitungsgeräte 10 umfassen zum einen ein Gargerät 12 wie zuvor beschrieben, zum andern ein Abkühlgerät 32 (auch Chiller genannt), ein Lagergerät 34, hier ein Lagerraum, und ein Transportgerät 36, das im gezeigten Ausführungsbeispiel ein Hordengestellwagen ist.

Die Verarbeitungsgeräte 10, also das Abkühlgerät 32, das Lagergerät 34, also der Lagerraum, und das Transportgerät 36 weisen zumindest Sensoren 16 zur Messung von Umgebungsparametern und ggf. Komponenten 17 zu Beeinflussung der Prozessumgebung auf.

Beispielsweise weist der Lagerraum, also das Lagergerät 34, eine Kühlvorrichtung auf, die die Temperatur im Lagerraum misst und beeinflussen kann. Der Lagerraum stellt dabei den Prozessraum 14 mitsamt der Prozessumgebung dar.

Auch das Transportgerät 36, z.B. der Hordengestellwagen, wird für diese Zwecke als Prozessraum 14 angesehen.

Außerdem ist eine übergeordnete Steuereinheit 38 vorgesehen, die mittels einer Kommunikationsschnittstelle 40, die auch in jedem der Verarbeitungsgeräte 10 enthalten ist, mit den Verarbeitungsgeräten 10 kommuniziert bzw. diese steuert.

Die übergeordnete Steuereinheit 38 weist zudem die zur Steuereinheit 18 beschriebenen Merkmale und Funktionalitäten auf.

Der illustrierte Verarbeitungsprozess hat sechs Verarbeitungsphasen. Der illustrierte Verarbeitungsprozess ist beispielsweise ein Prozess der zur Bankettverpflegung eingesetzt wird.

In einer ersten Verarbeitungsphase wird im ersten Verarbeitungsgerät 10, das das Gargerät 12 ist, ein Produkt, hier ein Lebensmittel, größtenteils gegart. Diese Verarbeitungsphase ist also ein Garprozess, der im Prozessraum 14 des Gargeräts 12 durchgeführt wird.

In der nächsten Verarbeitungsphase wird das gegarte Produkt im Abkühlgerät 32, das dann das Verarbeitungsgerät 10 darstellt, abgekühlt. Es handelt sich somit um einen Abkühlprozess.

Die abgekühlten Produkte werden in der nächsten Verarbeitungsphase im Lagerraum, das heißt im Lagergerät 34 gelagert. Es wird somit ein Lagerprozess als Verarbeitungsphase durchgeführt.

Anschließend werden die Produkte mittels des Transportgeräts 36 in der nächsten Verarbeitungsphase - die ein Transportprozess ist - zum Ort des Banketts transportiert.

Dort werden die Produkte mittels des Gargeräts 12 in einer nächsten Verarbeitungsphase wieder erwärmt und warmgehalten, sodass die Verarbeitungsphase ein Warmhalteprozess ist. Das Gargerät 12 dient somit auch als Warmhaltegerät.

Anschließend können die Produkte serviert werden.

Die übergeordnete Steuereinheit 38 oder eine der Steuereinheiten 18 der Verarbeitungsgeräte 10 kann eine oder mehrere Vorhersagemodule 20, 22 aufweisen. Die Steuereinheit 38 bzw. 18 kann den gesamten Verarbeitungsprozess oder die einzelnen Verarbeitungsphasen wie zuvor beschrieben unter Zuhilfenahme der Vorhersagemodule 20, 22 steuern bzw. regeln.

Neben einer isolierten Betrachtung der einzelnen Verarbeitungsphasen ist es auch denkbar, dass die Steuereinheit 38 bzw. 18 den gesamten Verarbeitungsprozess berücksichtigt, sodass die Prozessparameter in einer bestimmten Verarbeitungsphase auch Parameter sein können, die in einer anderen Verarbeitungsphase ermittelt oder gemessen wurden. Dabei werden die Parameter mehrerer verschiedener Verarbeitungsphasen verwendet, um den Verarbeitungsprozess anzupassen. Beispielsweise können bereits die Soll-Werte des Verarbeitungsprozesses für den Warmhalteprozess angepasst werden, wenn beim Abkühlprozess Abweichungen auftreten.

Auf diese Weise können gesamte, komplexe Verarbeitungsprozesse in mehreren Verarbeitungsgeräten 10 effektiv und mit hoher Qualität ausgeführt werden.

## Patentansprüche

1. Verfahren zur Bestimmung von wenigstens einem Ziel-Prozessparameter (Z₁, Z₂; Z_{K1} - Z_{Kn}, Z_{Z1} - Z_{Zn}) während eines Verarbeitungsprozesses zu einem Gegenwartszeitpunkt (tₐₖₜ₁, tₐₖₜ₂), bei dem in wenigstens einem Verarbeitungsgerät (10) ein Produkt verarbeitet wird, wobei der Verarbeitungsprozess zumindest teilweise ein Garprozess ist und in einem Garraum eines Gargerätes (12) als Verarbeitungsgerät (10) durchgeführt wird, wobei das Verfahren die folgenden Schritte umfasst:
a) Bereitstellen von Vergangenheitswerten wenigstens eines ersten Prozessparameters (P₁, P₂, P₃, P₄; P_{K1} - P_{Kn}, P_{Z1} - P_{Zn}) des Verarbeitungsprozesses und/oder von Vergangenheitswerten wenigstens eines zweiten Prozessparameters (P₅, P₆; P_{K1} - P_{Kn}, P_{Z1} - P_{Zn}) des Verarbeitungsprozesses,
wobei jeder der Prozessparameter ein kontrollierter Prozessparameter, ein zeitunabhängiger Prozessparameter, ein gemessener Prozessparameter oder ein verborgener Prozessparameter sein kann,
b) Bereitstellen von Zukunftswerten des wenigstens einen ersten Prozessparameters (P₁ - P₄; P_{K1} - P_{Kn}, P_{Z1} - P_{Zn}) des Verarbeitungsprozesses, wobei Zukunftswerte gemessene oder anderweitig bestimmte Werte des jeweiligen Prozessparameters zu einem Zeitpunkt in der Zukunft sind, also nach dem Gegenwartszeitpunkt, wobei
im Fall eines kontrollierten Prozessparameters die Zukunftswerte Soll-Werte des Verarbeitungsprozesses nach dem Gegenwartszeitpunkt sind, und
im Fall eines zeitunabhängigen Prozessparameters die Zukunftswerte gleich den Vergangenheitswerten sind, sodass die Zukunftswerte Spezifikationen entnommen oder einmalig gemessen worden sind,
c) Übergeben der Vergangenheitswerte und der Zukunftswerte an ein Vorhersagemodul (20, 22) einer Steuereinheit (18, 38), wobei das Vorhersagemodul (20, 22) wenigstens ein trainiertes künstliches neuronales Netzwerk (24, 26,28) umfasst, und
d) Bestimmen der Werte des wenigstens einen Ziel-Prozessparameters (Z₁, Z₂; Z_{K1} - Z_{Kn}, Z_{Z1} - Z_{Zn}) für die Gegenwart und/oder zumindest für einen zukünftigen Zeitpunkt durch das Vorhersagemodul (20, 22) wenigstens anhand der Vergangenheitswerte und der Zukunftswerte des wenigstens einen ersten Prozessparameters (P₁ - P₄; P_{K1} - P_{Kn}, P_{Z1} - P_{Zn}) und/oder zweiten Prozessparameters (P₅, P₆; P_{K1} - P_{Kn}, P_{Z1} - P_{Zn}), wobei der wenigstens eine Ziel-Prozessparameter zur Regelung oder Steuerung des Verarbeitungsprozesses herangezogen wird.

2. Verfahren nach Anspruch 1, **dadurch gekennzeichnet, dass** der Verarbeitungsprozess zumindest teilweise, insbesondere wenigstens eine Verarbeitungsphase,
- ein Abkühlprozess ist und in einem Abkühlgerät (32) als Verarbeitungsgerät (10) durchgeführt wird; und/oder
- ein Warmhalteprozess ist und in einem Warmhaltegerät als Verarbeitungsgerät (10) durchgeführt wird; und/oder
- ein Lagerprozess ist und in einem Lagergerät (34) als Verarbeitungsgerät (10) durchgeführt wird; und/oder
- ein Transportprozess ist und in einem Transportgerät (36) als Verarbeitungsgerät (10) durchgeführt wird.

3. Verfahren nach Anspruch 1 oder 2, **dadurch gekennzeichnet, dass** das künstliche neuronale Netzwerk (24, 26, 28) wenigstens einen Convolutional Layer und/oder wenigstens einen Recurrent Layer, insbesondere wenigstens ein Basic Recurrent Layer, wenigstens einen Long Short-Term Memory Layer, wenigstens einen Gated Recurrent Unit Layer und/oder wenigstens einen Minimal Gated Unit Layer, beispielsweise mit zwischen 50 und 100 Units umfasst, insbesondere wobei die Anzahl der Einheiten im Convolutional Layer der Anzahl an zu bestimmenden Ziel-Prozessparametern entspricht.

4. Verfahren einem der vorhergehenden Ansprüche, **dadurch gekennzeichnet, dass** wenigstens einer des wenigstens einen ersten Prozessparameters (P₁ - P₄; P_{K1} - P_{Kn}, P_{Z1} - P_{Zn}) ein zeitunabhängiger Prozessparameter und/oder ein kontrollierter Prozessparameter ist, dessen Vergangenheitswerte und Zukunftswerte bekannt sind; und/oder
dass wenigstens einer des wenigstens einen zweiten Prozessparameters (P₅, P₆; P_{K1} - P_{Kn}, P_{Z1} - P_{Zn}) ein gemessener Prozessparameter ist, dessen Vergangenheitswerte durch Messungen bekannt sind; und/oder
dass wenigstens einer des wenigstens einen Ziel-Prozessparameters (Z₁, Z₂; Z_{K1} - Z_{Kn}, Z_{Z1} - Z_{Zn}) ein verborgener Prozessparameter oder ein gemessener Prozessparameter ist, insbesondere wobei Vergangenheitswerte des Ziel-Prozessparameters (Z₁, Z₂; Z_{K1} - Z_{Kn}, Z_{Z1} - Z_{Zn}) bereitgestellt, dem Vorhersagemodul (20, 22) übergeben und zur Bestimmung der Werte des wenigstens einen Ziel-Prozessparameters (Z₁, Z₂; Z_{K1} - Z_{Kn}, Z_{Z1} - Z_{Zn}) für zukünftige Zeitpunkte herangezogen werden.

5. Verfahren nach einem der vorhergehenden Ansprüche, **dadurch gekennzeichnet, dass** die Vergangenheitswerte eines der Prozessparameter (P₁ - P₆; P_{K1} - P_{Kn}, P_{Z1} - P_{Zn}), die Zukunftswerte eines der Prozessparameter (P₁ - P₆; P_{K1} - P_{Kn}, P_{Z1} - P_{Zn}) und/oder die Vergangenheitswerte und die Zukunftswerte eines der Prozessparameter (P₁ - P₆; P_{K1} - P_{Kn}, P_{Z1} - P_{Zn}) als Zeitspur vorliegen, insbesondere wobei die dem künstlichen neuronalen Netzwerk (24, 26, 28) übergebenen Zeitspuren die gleiche Länge haben,
insbesondere wobei für den wenigstens einen Ziel-Prozessparameter (Z₁, Z₂; Z_{K1} - Z_{Kn}, Z_{Z1} - Z_{Zn}) und/oder den wenigstens einen zweiten Prozessparameter (P₅, P₆; P_{K1} - P_{Kn}, P_{Z1} - P_{Zn}), insbesondere einem gemessenen Prozessparameter oder einem verborgenen Prozessparameter, die Zukunftswerte gleich einem konstanten Wert, insbesondere einem für den jeweiligen Prozessparameter typischen Wert gesetzt werden.

6. Verfahren nach einem der vorhergehenden Ansprüche, **dadurch gekennzeichnet, dass** wenigstens eine Referenzzeitspur (R) bereitgestellt, dem Vorhersagemodul (20) übergeben und zur Bestimmung der Werte des wenigstens einen Ziel-Prozessparameters (Z₁; Z_{K1} - Z_{Kn}) für zumindest einen zukünftigen Zeitpunkt herangezogen wird, wobei die Referenzzeitspur (R) für Zeitpunkte vor dem Gegenwartszeitpunkt (tₐₖₜ₁, tₐₖₜ₂) einen ersten Wert, insbesondere 1, und für Zeitpunkte nach dem Gegenwartszeitpunkt (tₐₖₜ₁, tₐₖₜ₂) einen zweiten Wert, insbesondere 0 oder-1, enthält,
insbesondere wobei das Vorhersagemodul (20) ein künstliches neuronales Netzwerk (24) aufweist, das die Vergangenheitswerte des wenigstens einen Prozessparameters (P₁ - P₆; P_{K1} - P_{Kn}) und/oder des wenigstens einen Ziel-Prozessparameters (Z₁; Z_{K1} - Z_{Kn}), die Zukunftswerte des wenigstens einen Prozessparameters (P₁ - P₆; P_{K1} - P_{Kn}) und die Referenzzeitspur (R) erhält und die Werte des wenigstens einen Ziel-Prozessparameters (Z₁; Z_{K1} - Z_{Kn}) zumindest für einen zukünftigen Zeitpunkt bestimmt.

7. Verfahren nach einem der vorhergehenden Ansprüche, **dadurch gekennzeichnet, dass** das Vorhersagemodul (22) ein erstes künstliches neuronales Netzwerk (26) und ein zweites künstliches neuronales Netzwerk (28) aufweist,
wobei das erste künstliche neuronale Netzwerk (24) die Vergangenheitswerte des wenigstens einen ersten Prozessparameters (P₁ - P₄; P_{Z1} - P_{Zn}),des wenigstens einen zweiten Prozessparameters (P₅, P₆; P_{Z1} - P_{Zn}) und/oder des wenigstens einen Ziel-Prozessparameters (Z₂; Z_{Z1} - Z_{Zn}) erhält und wenigstens eine latente Variable (L) als Ausgabe ermittelt, und
wobei das zweite künstliche neuronale Netzwerk (26) die vom ersten künstlichen neuronalen Netzwerk (24) ermittelte wenigstens eine latente Variable (L) sowie die Vergangenheitswerte und/oder Zukunftswerte des wenigstens einen ersten und/oder zweiten Prozessparameters (P₁ - P₆; P_{Z1} - P_{Zn}) erhält und anhand der latenten Variable (L) sowie der erhaltenen Zukunftswerte und/oder Vergangenheitswerte die Werte des wenigstens einen Ziel-Prozessparameters (Z₂; Z_{Z1} - Z_{Zn}) zumindest für einen zukünftigen Zeitpunkt bestimmt.

8. Verfahren nach einem der vorhergehenden Ansprüche, **dadurch gekennzeichnet, dass** das wenigstens eine Vorhersagemodul (20, 22) ein Umgebungsmodul, das als Ziel-Prozessparameter (Z₁, Z₂; Z_{K1} - Z_{Kn}, Z_{Z1} - Z_{Zn}) einen Umgebungsparameter und/oder wenigstens einen Kontrollparameter, der den wenigstens einen Umgebungsparameter beeinflusst, bestimmt, und/oder ein Prozessergebnismodul ist, das als Ziel-Prozessparameter einen Produktparameter bestimmt,
insbesondere wobei die Steuereinheit (18, 38), insbesondere das Verarbeitungsgerät (10), ein erstes Vorhersagemodul (20), das ein Umgebungsmodul ist, und ein zweites Vorhersagemodul (22) aufweist, das ein Prozessergebnismodul ist,
wobei das erste Vorhersagemodul (20) die Werte des wenigstens einen Umgebungsparameters und/oder des wenigstens einen Kontrollparameters zumindest für einen zukünftigen Zeitpunkt, insbesondere auch für zumindest einen vergangenen Zeitpunkt als Werte seines wenigstens einen Ziel-Prozessparameters (Z_{K1} - Z_{Kn}) bestimmt,
wobei das zweite Vorhersagemodul (22) die Werte des wenigstens einen Umgebungsparameters zumindest für zumindest einen zukünftigen Zeitpunkt, insbesondere auch für zumindest einen vergangenen Zeitpunkt vom ersten Vorhersagemodul (20) erhält, und
wobei das zweite Vorhersagemodul (22) zumindest anhand der erhaltenen Werte des wenigstens einen Umgebungsparameters und/oder Kontrollparameters die Werte zumindest für einen zukünftigen Zeitpunkt des wenigstens einen Produktparameters als Werte seines Ziel-Prozessparameters (Z_{Z1} - Z_{Zn}) bestimmt;
insbesondere wobei das erste Vorhersagemodul (20) ein künstliches neuronales Netzwerk (24) aufweist, das eine Referenzzeitspur (R) erhält und/oder dass das zweite Vorhersagemodul (22) zwei künstliche neuronale Netzwerke (26, 28) aufweist.

9. Verfahren nach einem der vorhergehenden Ansprüche, **dadurch gekennzeichnet, dass** eines des wenigstens einen Verarbeitungsgeräts (10) ein Gargerät (12) und das Produkt ein Lebensmittel ist, und Messwerte eines Kerntemperaturfühlers (30) von einer Steuereinheit (18) des Gargerätes (12) erhalten und protokolliert werden,
wobei einer des wenigstens einen Ziel-Prozessparameters (Z₁, Z₂; Z_{K1} - Z_{Kn}, Z_{Z1} - Z_{Zn}) die Kerntemperatur des Lebensmittels ist, wobei Werte der Kerntemperatur auch für zumindest einen vergangenen Zeitpunkt durch das Vorhersagemodul (20, 22) bestimmt werden,
wobei die Steuereinheit (18, 38) einen Vergleich der Messwerte des Kerntemperaturfühlers (30) mit den durch das Vorhersagemodul (20, 22) bestimmten Werten der Kerntemperatur durchführt,
wobei die Steuereinheit (18, 38) anhand des Ergebnisses des Vergleichs bestimmt, ob der Kerntemperaturfühler (30) korrekt im Lebensmittels eingesteckt ist oder nicht,
insbesondere wobei die Messwerte des Kerntemperaturfühlers (30) dem Vorhersagemodul (20, 22) als Vergangenheitsdaten eines zweiten Prozessparameters (P₅, P₆; P_{K1} - P_{Kn}, P_{Z1} - P_{Zn}) zugeführt wurden.

10. Verfahren nach einem der vorhergehenden Ansprüche, **dadurch gekennzeichnet, dass** eines des wenigstens einen Verarbeitungsgeräts (10) ein Gargerät (12) und das Produkt ein Lebensmittel ist und Messwerte eines Kerntemperaturfühlers (30) von einer Steuereinheit (18) des Gargerätes (12) erhalten und protokolliert und an das Vorhersagemodul (20, 22) als Vergangenheitswerte eines Prozessparameters (Z₁, Z₂; Z_{K1} - Z_{Kn}, Z_{Z1} - Z_{Zn}) übergeben werden,
wobei einer des wenigstens einen Ziel-Prozessparameters (Z₁, Z₂; Z_{K1} - Z_{Kn}, Z_{Z1} - Z_{Zn}) die tatsächliche Kerntemperatur des Lebensmittels und/oder ein Maß für die Güte der Stechung des Kerntemperaturfühlers (30) ist.

11. Verfahren nach Anspruch 9 oder 10, **dadurch gekennzeichnet, dass**, sofern erkannt wurde, dass der Kerntemperaturfühler (30) nicht korrekt im Lebensmittel eingesteckt ist, die durch das Vorhersagemodul (20, 22) bestimmten Vergangenheits- und/oder Zukunftswerte zur weiteren Steuerung bzw. Regelung des Verarbeitungsgerätes (10) anstelle der Messwerte des Kerntemperaturfühlers (30) herangezogen werden.

12. Verfahren nach einem der vorhergehenden Ansprüche, **dadurch gekennzeichnet, dass** das wenigstens eine künstliche neuronale Netzwerk (24, 26, 28) durch überwachtes Lernen mit Trainingsdatensätzen trainiert wird, wobei die Trainingsdatensätze Eingangs-Trainingsdaten und zughörige Ergebnisdaten aufweisen,
wobei die Eingangs-Trainingsdaten jeweils Vergangenheitswerte und Zukunftswerte wenigstens eines ersten Prozessparameters (P₁ - P₄; P_{K1} - P_{Kn}, P_{Z1} - P_{Zn}) des Verarbeitungsprozesses und Vergangenheitswerte wenigstens eines zweiten Prozessparameters (P₅, P₆; P_{K1} - P_{Kn}, P_{Z1} - P_{Zn}) des Verarbeitungsprozesses umfassen,
wobei die Ergebnisdaten diejenigen Ziel-Prozessparameter (Z₁, Z₂; Z_{K1} - Z_{Kn}, Z_{Z1} - Z_{Zn}) zumindest für einen zukünftigen Zeitpunkt umfassen, die sich bei der Ausführung eines Verarbeitungsprozesses, wie er durch die Eingangs-Trainingsdaten beschrieben wird, ergeben.

13. Steuereinheit für wenigstens ein Verarbeitungsgerät (10), die wenigstens ein Vorhersagemodul (20, 22) aufweist, wobei die Steuereinheit (18, 38) dazu eingerichtet ist, ein Verfahren nach einem der vorhergehenden Ansprüche durchzuführen.

14. Computerprogramm mit Programmcodemitteln, um die Schritte eines Verfahrens nach einem der Ansprüche 1 bis 12 durchzuführen, wenn das Computerprogramm auf einem Computer oder einer entsprechenden Steuereinheit (18, 38) gemäß Anspruch 13ausgeführt wird.

15. Computerlesbarer Datenträger, auf dem ein Computerprogramm gemäß Anspruch 14 gespeichert ist.

## Claims

1. A method of determining at least one target process parameter (Z₁, Z₂; Z_{K1} - Z_{Kn}, Z_{Z1} - Z_{Zn}) during a processing process at a present point in time (tₐₖₜ₁, tₐₖₜ₂), in which a product is processed in at least one processing device (10), the processing process being at least partly a cooking process and being carried out in a cooking chamber of a cooking device (12) as the processing device (10), the method comprising the following steps:
a) providing historical values of at least one first process parameter (P₁, P₂, P₃, P₄; P_{K1} - P_{Kn}, P_{Z1} - P_{Zn}) of the processing process and/or historical values of at least one second process parameter (P₅, P₆; P_{K1} - P_{Kn}, P_{Z1} - P_{Zn}) of the processing process,
wherein each of the process parameters may be a controlled process parameter, a time-independent process parameter, a measured process parameter, or a hidden process parameter,
b) providing future values of the at least one first process parameter (P₁ - P₄; P_{K1} - P_{Kn}, P_{Z1} - P_{Zn}) of the processing process, wherein future values are measured or otherwise determined values of the respective process parameter at a point in time in the future, that is, after the present point in time, wherein
in the case of a controlled process parameter, the future values are setpoint values of the processing process after the present point in time, and
in the case of a time-independent process parameter, the future values are equal to the historical values, so that the future values have been taken from specifications or have been measured once,
c) transferring the historical values and the future values to a prediction module (20, 22) of a control unit (18, 38), wherein the prediction module (20, 22) comprises at least one trained artificial neural network (24, 26, 28), and
d) determining, by the prediction module (20, 22), the values of the at least one target process parameter (Z₁, Z₂; Z_{K1} - Z_{Kn}, Z_{Z1} - Z_{Zn}) for the present and/or at least for a future point in time at least on the basis of the historical values and the future values of the at least one first process parameter (P₁ - P₄; P_{K1} - P_{Kn}, P_{Z1} - P_{Zn}) and/or second process parameter (P₅, P₆; P_{K1} - P_{Kn}, P_{Z1} - P_{Zn}), wherein the at least one target process parameter is used for closed-loop or open-loop control of the processing process.

2. The method according to claim 1, **characterized in that** the processing process at least partly, in particular at least one processing phase,
- is a cooling process and is performed in a cooling device (32) as the processing device (10); and/or
- is a holding process and is performed in a holding device as the processing device (10); and/or
- is a storing process and is performed in a storing device (34) as the processing device (10); and/or
- is a transport process and is performed in a transport device (36) as the processing device (10).

3. The method according to claim 1 or 2, **characterized in that** the artificial neural network (24, 26, 28) comprises at least one convolutional layer and/or at least one recurrent layer, in particular at least one basic recurrent layer, at least one long short-term memory layer, at least one gated recurrent unit layer and/or at least one minimal gated unit layer, for example having between 50 and 100 units, in particular wherein the number of units in the convolutional layer corresponds to the number of target process parameters to be determined.

4. The method according to any of the preceding claims, **characterized in that** at least one of the at least one first process parameter (P₁ - P₄; P_{K1} - P_{Kn}, P_{Z1} - P_{Zn}) is a time-independent process parameter and/or a controlled process parameter the historical values and future values of which are known; and/or
**in that** at least one of the at least one second process parameter (P₅, P₆; P_{K1} - P_{Kn}, P_{Z1} - P_{Zn}) is a measured process parameter the historical values of which are known through measurements; and/or
**in that** at least one of the at least one target process parameter (Z₁, Z₂; Z_{K1} - Z_{Kn}, Z_{Z1} - Z_{Zn}) is a hidden process parameter or a measured process parameter, in particular wherein historical values of the target process parameter (Z₁, Z₂; Z_{K1} - Z_{Kn}, Z_{Z1} - Z_{Zn}) are provided, transferred to the prediction module (20, 22) and used for determining the values of the at least one target process parameter (Z₁, Z₂; Z_{K1} - Z_{Kn}, Z_{Z1} - Z_{Zn}) for future points in time.

5. The method according to any of the preceding claims, **characterized in that** the historical values of one of the process parameters (P₁ - P₆; P_{K1} - P_{Kn}, P_{Z1} - P_{Zn}),the future values of one of the process parameters (P₁ - P₆; P_{K1} - P_{Kn}, P_{Z1} - P_{Zn}) and/or the historical values and the future values of one of the process parameters (P₁ - P₆; P_{K1} - P_{Kn}, P_{Z1} - P_{Zn}) are available as a time track, in particular wherein the time tracks transferred to the artificial neural network (24, 26, 28) have the same length,
in particular wherein for the at least one target process parameter (Z₁, Z₂; Z_{K1} - Z_{Kn}, Z_{Z1} - Z_{Zn}) and/or the at least one second process parameter (P₅, P₆; P_{K1} - P_{Kn}, P_{Z1} - P_{Zn}),in particular a measured process parameter or a hidden process parameter, the future values are set to be equal to a constant value, in particular a value typical of the respective process parameter.

6. The method according to any of the preceding claims, **characterized in that** at least one reference time track (R) is provided, transferred to the prediction module (20) and used for determining the values of the at least one target process parameter (Z₁; Z_{K1} - Z_{Kn}) for at least one future point in time, wherein the reference time track (R) contains a first value, in particular 1, for points in time before the present point in time (tₐₖₜ₁, tₐₖₜ₂) and a second value, in particular 0 or -1, for points in time after the present point in time (tₐₖₜ₁, tₐₖₜ₂),
in particular wherein the prediction module (20) includes an artificial neural network (24) which receives the historical values of the at least one process parameter (P₁ - P₆; P_{K1} - P_{Kn}) and/or of the at least one target process parameter (Z₁; Z_{K1} - Z_{Kn}), the future values of the at least one process parameter (P₁ - P₆; P_{K1} - P_{Kn}) and the reference time track (R) and determines the values of the at least one target process parameter (Z₁; Z_{K1} - Z_{Kn}) at least for a future point in time.

7. The method according to any of the preceding claims, **characterized in that** the prediction module (22) includes a first artificial neural network (26) and a second artificial neural network (28),
wherein the first artificial neural network (24) receives the historical values of the at least one first process parameter (P₁ - P₄; P_{Z1} - P_{Zn}),of the at least one second process parameter (P₅, P₆; P_{Z1} - P_{Zn}) and/or of the at least one target process parameter (Z₂; Zz, - Z_{Zn}) and ascertains at least one latent variable (L) as an output, and
wherein the second artificial neural network (26) receives the at least one latent variable (L) ascertained by the first artificial neural network (24) and the historical values and/or future values of the at least one first and/or second process parameter (P₁ - P₆; P_{Z1} - P_{Zn}) and determines the values of the at least one target process parameter (Z₂; Zz, - Z_{Zn}) at least for a future point in time on the basis of the latent variable (L) and the future values and/or historical values received.

8. The method according to any of the preceding claims, **characterized in that** the at least one prediction module (20, 22) is an environment module that determines as the target process parameter (Z₁, Z₂; Z_{K1} - Z_{Kn}, Z_{Z1} - Z_{Zn}) an environmental parameter and/or at least one control parameter that influences the at least one environmental parameter, and/or a process result module that determines a product parameter as the target process parameter,
in particular wherein the control unit (18, 38), in particular the processing device (10), includes a first prediction module (20), which is an environment module, and a second prediction module (22), which is a process result module,
wherein the first prediction module (20) determines the values of the at least one environmental parameter and/or of the at least one control parameter at least for a future point in time, in particular also for at least one past point in time, as the values of its at least one target process parameter (Z_{K1} - Z_{Kn}),
wherein the second prediction module (22) receives the values of the at least one environmental parameter at least for at least one future point in time, in particular also for at least one past point in time, from the first prediction module (20), and
wherein the second prediction module (22) determines, at least on the basis of the received values of the at least one environmental parameter and/or control parameter, the values at least for a future point in time of the at least one product parameter as values of its target process parameter (Z_{Z1} - Z_{Zn});
in particular wherein the first prediction module (20) includes an artificial neural network (24) that receives a reference time track (R), and/or **in that** the second prediction module (22) includes two artificial neural networks (26, 28).

9. The method according to any of the preceding claims, **characterized in that** one of the at least one processing device (10) is a cooking device (12) and the product is a food, and measured values of a core temperature sensor (30) are received and logged by a control unit (18) of the cooking device (12),
wherein one of the at least one target process parameter (Z₁, Z₂; Z_{K1} - Z_{Kn}, Z_{Z1} - Z_{Zn}) is the core temperature of the food, with values of the core temperature also being determined for at least one past point in time by the prediction module (20, 22),
wherein the control unit (18, 38) performs a comparison of the measured values of the core temperature sensor (30) with the values of the core temperature determined by the prediction module (20, 22),
wherein, based on the result of the comparison, the control unit (18, 38) determines whether or not the core temperature sensor (30) is correctly inserted in the food,
in particular wherein the measured values of the core temperature sensor (30) were supplied to the prediction module (20, 22) as historical data of a second process parameter (P₅, P₆; P_{K1} - P_{Kn}, P_{Z1} - P_{Zn}).

10. The method according to any of the preceding claims, **characterized in that** one of the at least one processing device (10) is a cooking device (12) and the product is a food, and measured values of a core temperature sensor (30) are received and logged by a control unit (18) of the cooking device (12) and transferred to the prediction module (20, 22) as historical values of a process parameter (Z₁, Z₂; Z_{K1} - Z_{Kn}, Z_{Z1} - Z_{Zn}),
wherein one of the at least one target process parameter (Z₁, Z₂; Z_{K1} - Z_{Kn}, Z_{Z1} - Z_{Zn}) is the actual core temperature of the food and/or a measure of the quality of the insertion of the core temperature sensor (30).

11. The method according to claim 9 or 10, **characterized in that**, if it has been detected that the core temperature sensor (30) has not been correctly inserted in the food, the historical and/or future values determined by the prediction module (20, 22) are used for the further open-loop or closed-loop control of the processing device (10) instead of the measured values of the core temperature sensor (30).

12. The method according to any of the preceding claims, **characterized in that** the at least one artificial neural network (24, 26, 28) is trained by supervised learning with training data sets, the training data sets including input training data and associated result data,
wherein the input training data each comprise historical values and future values of at least one first process parameter (P₁ - P₄; P_{K1} - P_{Kn}, P_{Z1} - P_{Zn}) of the processing process and historical values of at least one second process parameter (P₅, P₆; P_{K1} - P_{Kn}, P_{Z1} - P_{Zn}) of the processing process,
wherein the result data comprise those target process parameters (Z₁, Z₂; Z_{K1} - Z_{Kn}, Z_{Z1} - Z_{Zn}) at least for a future point in time which result during execution of a processing process as described by the input training data.

13. A control unit for at least one processing device (10), including at least one prediction module (20, 22), the control unit (18, 38) being configured to carry out a method according to any of the preceding claims.

14. A computer program comprising program code means for carrying out the steps of a method according to any of claims 1 to 12, when the computer program is executed on a computer or an appropriate control unit (18, 38) according to claim 13.

15. A computer-readable data carrier on which a computer program according to claim 14 is stored.

## Revendications

1. Procédé de détermination d'au moins un paramètre de processus cible (Z₁, Z₂; Z_{K1}-Z_{Kn}, Z_{Z1}-Z_{Zn}) pendant un processus de traitement à un moment présent (tₐₖₜ₁, tₐₖₜ₂), dans lequel un produit est traité dans au moins un appareil de traitement (10), le processus de traitement étant au moins partiellement un processus de cuisson et étant réalisé dans un espace de cuisson d'un appareil de cuisson (12) en tant qu'appareil de traitement (10), le procédé comprenant les étapes suivantes :
a) le fournissement de valeurs passées d'au moins un premier paramètre de processus (P₁, P₂, P₃, P₄; P_{K1}-P_{Kn}, P_{Z1}-P_{Zn}) du processus de traitement et/ou de valeurs passées d'au moins un deuxième paramètre de processus (P₅, P₆; P_{K1}-P_{Kn}, P_{Z1}-P_{Zn}) du processus de traitement,
chacun des paramètres de processus pouvant être un paramètre de processus contrôlé, un paramètre de processus indépendant du temps, un paramètre de processus mesuré ou un paramètre de processus dissimulé,
b) le fournissement de valeurs futures dudit au moins un premier paramètre de processus (P₁-P₄ ; P_{K1}-P_{Kn}, P_{Z1}-P_{Zn}) du processus de traitement, des valeurs futures étant des valeurs mesurées ou déterminées d'une autre manière du paramètre de processus respectif à un moment dans le futur, donc après le moment présent,
les valeurs futures, dans le cas d'un paramètre de processus contrôlé, étant des valeurs de consigne du processus de traitement après le moment présent, et
les valeurs futures, dans le cas d'un paramètre de processus indépendant du temps, étant égales aux valeurs passées de sorte que les valeurs futures sont prélevées de spécifications ou sont mesurées une fois,
c) la transmission des valeurs passées et des valeurs futures à un module de prédiction (20, 22) d'une unité de commande (18, 38), le module de prédiction (20, 22) comprenant au moins un réseau neuronal artificiel entraîné (24, 26, 28), et
d) la détermination des valeurs dudit au moins un paramètre de processus cible (Z₁, Z₂; Z_{K1}-Z_{Kn}, Z_{Z1}-Z_{Zn}) pour le présent et/ou au moins pour un moment futur par le module de prédiction (20, 22) sur la base au moins des valeurs passées et des valeurs futures dudit au moins un premier paramètre de processus (P₁-P₄ ; P_{K1}-P_{Kn}, P_{Z1}-P_{Zn}) et/ou deuxième paramètre de processus (P₅, P₆ ; P_{K1}-P_{Kn}, P_{Z1}-P_{Zn}), ledit au moins un paramètre de processus cible étant utilisé pour la commande en boucle fermée ou en boucle ouverte du processus de traitement.

2. Procédé selon la revendication 1, **caractérisé en ce que** le processus de traitement, au moins partiellement, en particulier au moins une phase de traitement
- est un processus de refroidissement et est réalisé dans un appareil de refroidissement (32) en tant qu'appareil de traitement (10) ; et/ou
- est un processus de maintien de température et est réalisé dans un appareil de maintien de température en tant qu'appareil de traitement (10) ; et/ou
- est un processus de stockage et est réalisé dans un appareil de stockage (34) en tant qu'appareil de traitement (10) ; et/ou
- est un processus de transport et est réalisé dans un appareil de transport (36) en tant qu'appareil de traitement (10).

3. Procédé selon la revendication 1 ou 2, **caractérisé en ce que** le réseau neuronal artificiel (24, 26, 28) comprend au moins une couche de convolution et/ou au moins une couche récurrente, en particulier au moins une couche récurrente de base, au moins une couche de mémoire longue à court terme, au moins une couche d'unités récurrentes fermées et/ou au moins une couche d'unités fermées minimales, par exemple avec entre 50 et 100 unités, le nombre d'unités dans la couche de convolution correspondant en particulier au nombre de paramètres de processus cibles à déterminer.

4. Procédé selon l'une des revendications précédentes, **caractérisé en ce qu'**au moins l'un dudit au moins un premier paramètre de processus (P₁-P₄ ; P_{K1}-P_{Kn}, P_{Z1}-P_{Zn}) est un paramètre de processus indépendant du temps et/ou un paramètre de processus contrôlé dont les valeurs passées et les valeurs futures sont connues ; et/ou
**en ce qu'**au moins l'un dudit au moins un deuxième paramètre de processus (P₅, P₆; P_{K1}-P_{Kn}, P_{Z1}-P_{Zn}) est un paramètre de processus mesuré dont les valeurs passées sont connues par des mesures ; et/ou
**en ce qu'**au moins l'un dudit au moins un paramètre de processus de cible (Z₁, Z₂; Z_{K1}-Z_{Kn}, Z_{Z1}-Z_{Zn}) est un paramètre de processus dissimulé ou un paramètre de processus mesuré, des valeurs passées du paramètre de processus cible (Z₁, Z₂; Z_{K1}-Z_{Kn}, Z_{Z1}-Z_{Zn}) étant en particulier fournies, transmises au module de prédiction (20, 22) et utilisées pour la détermination des valeurs dudit au moins paramètre de processus cible (Z₁, Z₂; Z_{K1}-Z_{Kn}, Z_{Z1}-Z_{Zn}) pour des moments futurs.

5. Procédé selon l'une des revendications précédentes, **caractérisé en ce que** les valeurs passées de l'un des paramètres de processus (P₁-P₆ ; P_{K1}-P_{Kn}, P_{Z1}-P_{Zn}), les valeurs futures de l'un des paramètres de processus (Pi-Pe ; P_{K1}-P_{Kn}, P_{Z1}-P_{Zn}) et/ou les valeurs passées et les valeurs futures de l'un des paramètres de processus (P₁-P₆ ; P_{K1}-P_{Kn}, P_{Z1}-P_{Zn}) sont présentes sous forme de piste temporelle, les pistes temporelles transmises au réseau neuronal artificiel (24, 26, 28) présentant en particulier la même longueur,
pour ledit au moins un paramètre de processus de cible (Z₁, Z₂; Z_{K1}-Z_{Kn}, Z_{Z1}-Z_{Zn}) et/ou ledit au moins un deuxième paramètre de processus (P₅, P₆; P_{K1}-P_{Kn}, P_{Z1}-P_{Zn}), en particulier un paramètre de processus mesuré ou un paramètre de processus dissimulé, les valeurs futures étant en particulier fixées de manière à être égales à une valeur constante, en particulier à une valeur typique pour le paramètre de processus respectif.

6. Procédé selon l'une des revendications précédentes, **caractérisé en ce qu'**au moins une piste temporelle de référence (R) est fournie, est transmise au module de prédiction (20) et est utilisée pour la détermination des valeurs dudit au moins un paramètre de processus cible (Z₁; Z_{K1}-Z_{Kn}) pour au moins un moment futur, la piste temporelle de référence (R) contenant pour des moments avant le moment présent (tₐₖₜ₁, tₐₖₜ₂) une première valeur, en particulier 1, et pour des moments après le moment présent (tₐₖₜ₁, tₐₖₜ₂) une deuxième valeur, en particulier 0 ou -1,
le module de prédiction (20) présentant un réseau neuronal artificiel (24) qui reçoit les valeurs passées dudit au moins un paramètre de processus (P₁-P₆ ; P_{K1}-P_{Kn}) et/ou dudit au moins un paramètre de processus cible (Z₁ ; Z_{K1}-Z_{Kn}), les valeurs futures dudit au moins un paramètre de processus (P₁-P₆ ; P_{K1}-P_{Kn}) et la piste temporelle de référence (R), et détermine les valeurs dudit au moins un paramètre de processus cible (Z₁ ; Z_{K1}-Z_{Kn}) au moins pour un moment futur.

7. Procédé selon l'une des revendications précédentes, **caractérisé en ce que** le module de prédiction (22) présente un premier réseau neuronal artificiel (26) et un deuxième réseau neuronal artificiel (28),
le premier réseau neuronal artificiel (24) recevant les valeurs passées dudit au moins un premier paramètre de processus (P₁-P₄ ; P_{Z1}-P_{Zn}), dudit au moins un deuxième paramètre de processus (P₅, P₆ ; P_{Z1}-P_{Zn}) et/ou dudit au moins un paramètre de processus cible (Z₂; Z_{Z1}-Z_{Zn}) et déterminant au moins une variable latente (L) en tant que sortie, et
le deuxième réseau neuronal artificiel (26) recevant ladite au moins une variable latente (L) déterminée par le premier réseau neuronal artificiel (24) et les valeur passées et/ou les valeurs futures dudit au moins un premier et/ou deuxième paramètre de processus (P₁-P₆; P_{Z1}-P_{Zn}) et déterminant les valeurs dudit au moins un paramètre de processus cible (Z₂; Z_{Z1}-Z_{Zn}) au moins pour un moment futur sur la base de la variable latente (L) et des valeurs futures et/ou des valeurs passées obtenues.

8. Procédé selon l'une des revendications précédentes, **caractérisé en ce que** ledit au moins un module de prédiction (20, 22) est un module d'environnement déterminant en tant que paramètre de processus cible (Z₁, Z₂; Z_{K1}-Z_{Kn}, Z_{Z1}-Z_{Zn}) un paramètre d'environnement et/ou au moins un paramètre de contrôle qui influence ledit au moins un paramètre d'environnement, et/ou un module de résultat de processus qui détermine un paramètre de produit en tant que paramètre de processus cible,
l'unité de commande (18, 38), en particulier l'appareil de traitement (10), présentant un premier module de prédiction (20) qui est un module d'environnement, et un deuxième module de prédiction (22) qui est un module de résultat de processus,
le premier module de prédiction (20) déterminant les valeurs dudit au moins un paramètre d'environnement et/ou dudit au moins un paramètre de contrôle au moins pour un moment futur, en particulier aussi pour au moins un moment passé en tant que valeurs de son au moins un paramètre de processus cible (Z_{K1}-Z_{Kn}),
le deuxième module de prédiction (22) recevant du premier module de prédiction (20) les valeurs dudit au moins un paramètre d'environnement au moins pour au moins un moment futur, en particulier aussi pour au moins un moment passé, et
le deuxième module de prédiction (22) déterminant au moins sur la base des valeurs obtenues dudit au moins un paramètre d'environnement et/ou paramètre de contrôle les valeurs au moins pour un moment futur dudit au moins un paramètre de produit en tant que valeurs de son paramètre de processus cible (Z_{Z1}-Z_{Zn}) ;
le premier module de prédiction (20) présentant en particulier un réseau neuronal artificiel (24) qui obtient une piste temporelle de référence (R) et/ou **en ce que** le deuxième module de prédiction (22) présente deux réseaux neuronaux artificiels (26, 28).

9. Procédé selon l'une des revendications précédentes, **caractérisé en ce que** l'un dudit au moins un appareil de traitement (10) est un appareil de cuisson (12) et le produit est un produit alimentaire, et des valeurs mesurées d'un détecteur de température à coeur (30) sont obtenues et enregistrées par une unité de commande (18) de l'appareil de cuisson (12),
l'un dudit au moins un paramètre de processus cible (Z₁, Z₂; Z_{K1}-Z_{Kn}, Z_{Z1}-Z_{Zn}) étant la température à coeur du produit alimentaire, des valeurs de la température à cœur étant également déterminées par le module de prédiction (20, 22) pour au moins un moment passé,
l'unité de commande (18, 38) effectuant une comparaison entre les valeurs mesurées du détecteur de température à cœur (30) et les valeurs de la température à cœur déterminées par le module de prédiction (20, 22),
l'unité de commande (18, 38) déterminant sur la base du résultat de la comparaison si le détecteur de température à coeur (30) est correctement inséré dans le produit alimentaire ou non,
les valeurs mesurées du détecteur de température à cœur (30) étant en particulier fournies au module de prédiction (20, 22) sous forme de données passées d'un deuxième paramètre de processus (P₅, P₆ ; P_{K1}-P_{Kn}, P_{Z1}-P_{Zn}).

10. Procédé selon l'une des revendications précédentes, **caractérisé en ce que** l'un dudit au moins un appareil de traitement (10) est un appareil de cuisson (12) et le produit est un produit alimentaire, et des valeurs mesurées d'un détecteur de température à cœur (30) sont obtenues et enregistrées par une unité de commande (18) de l'appareil de cuisson (12) et sont fournies au module de prédiction (20, 22) en tant que valeurs passées d'un paramètre de processus (Z₁, Z₂ ; Z_{K1}-Z_{Kn}, Z_{Z1-}Z_{Zn}),
l'un dudit au moins un paramètre de processus cible (Z₁, Z₂ ; Z_{K1}-Z_{Kn}, Z_{Z1}-Z_{Zn}) étant la température à coeur réelle du produit alimentaire et/ou une grandeur pour la qualité de l'insertion du détecteur de température à cœur (30).

11. Procédé selon la revendication 9 ou 10, **caractérisé en ce que**, s'il est reconnu que le détecteur de température à coeur (30) n'est pas correctement inséré dans le produit alimentaire, les valeurs passées et/ou futures déterminées par le module de prédiction (20, 22) sont utilisées à la place des valeurs mesurées du détecteur de température à coeur (30) pour la commande ultérieure en boucle ouverte ou en boucle fermée de l'appareil de traitement (10).

12. Procédé selon l'une des revendications précédentes, **caractérisé en ce que** ledit au moins un réseau neuronal artificiel (24, 26, 28) est entraîné par apprentissage supervisé avec des ensembles de données d'entraînement, les ensembles de données d'entraînement présentant des données d'entraînement d'entrée et des données de résultat associées,
les données d'entraînement d'entrée comprenant respectivement des valeurs passées et des valeurs futures au moins d'un premier paramètre de processus (P₁-P₄ ; P_{K1}-P_{Kn}, P_{Z1}-P_{Zn}) du processus de traitement et des valeurs passées au moins d'un deuxième paramètre de processus (P₅, P₆ ; P_{K1}-P_{Kn}, P_{Z1}-P_{Zn}) du processus de traitement,
les données de résultat comprenant les paramètres de processus cibles (Z₁, Z₂ ; Z_{K1}-Z_{Kn}, Z_{Z1}-Z_{Zn}) au moins pour un moment futur, lesquels sont obtenus lors de la mise en œuvre d'un processus de traitement tel que décrit par les données d'entraînement d'entrée.

13. Unité de commande pour au moins un appareil de traitement (10), présentant au moins un module de prédiction (20, 22), l'unité de commande (18, 38) étant aménagée pour la mise en œuvre d'un procédé selon l'une des revendications précédentes.

14. Programme informatique comprenant des moyens de code de programme pour la mise en œuvre des étapes d'un procédé selon l'une des revendications 1 à 12 lorsque le programme informatique est mis en oeuvre sur un ordinateur ou une unité de commande (18, 38) correspondante selon la revendication 13.

15. Support de données lisible par ordinateur sur lequel un programme informatique selon la revendication 14 est mis en mémoire.
